# EUROPEAN PATENT APPLICATION

(11) **EP 1 615 368 A1**
(43) Date of publication of application: **11.01.2006**
(21) Application number: 04725810.8
(22) Date of filing: 05.04.2004
(51) Int. Cl.: H04L 9/08

(54) **INFORMATION RECORDING MEDIUM DRIVE DEVICE**

(30) Priority: 11.04.2003 JP 2003107571
(71) Applicant: SONY CORPORATION, Tokyo 141-0001 (JP)
(72) Inventor: KITANI, Satoshi, c/o SONY CORPORATION, SHINAGAWA-KU, Tokyo 141-0001 (JP); YONEMITSU, Jun, c/o SONY CORPORATION, SHINAGAWA-KU, Tokyo 141-0001 (JP); MURAMATSU, Katsumi, c/o SONY CORPORATION, SHINAGAWA-KU, Tokyo 141-0001 (JP); ASANO, Tomoyuki, c/o SONY CORPORATION, SHINAGAWA-KU, Tokyo 141-0001 (JP); TAKASHIMA, Yoshikazu, c/o SONY CORPORATION, SHINAGAWA-KU, Tokyo 141-0001 (JP)
(74) Representative: Leppard, Andrew John
(86) International application number: PCT/JP2004/004909
(87) International publication number: WO 2004/093379

(57) **Abstract**

The present invention provides a configuration capable of effectively preventing an encrypted content stored on an information-recording medium from being misused. In this configuration, a seed (seed 2) required for generating a block key to be applied to a process to decode an encrypted content is stored as information encrypted by using another block key Kb1. In addition, in a configuration where the seed (seed 2) needs to be transferred from a device to another, both the seed (seed 2) and a recording key K2 are transferred from the device to the other as information encrypted by using a session key. In such configurations, it is difficult to analyze the seed (seed 2) by acquisition of data from the information-recording medium or a data transmission line. Thus, difficulties to analyze a key generated by using the seed and analyze an encryption algorithm are increased. As a result, protection of contents at a high level of security can be implemented.

## Description

### Technical Field

The present invention relates to an information-processing apparatus, an information-recording medium drive, an information-recording medium, an information-processing method, and a computer program. To put it in detail, the present invention relates to an information-processing apparatus, an information-recording medium drive, an information-recording medium, an information-processing method, and a computer program for implementing prevention of illegal utilization of a content in processing to record and reproduce data onto and from an information-recording medium.

### Background Art

Recently, various kinds of software data are circulated through a network such the Internet or distributed by recording the software data onto an information-recording medium for distribution. Examples of the software data are audio data such as musical data, video data such as a movie, a game program, and various application programs. The software data is referred to hereafter as a content. Examples of the information-recording medium include a CD (Compact Disc), a DVD (Digital Versatile Disc), and an MD (Mini Disc). These distributed contents are reproduced and used by using equipment owned by the user. Examples of the equipment are a PC (Personal Computer) and a reproduction apparatus such as a CD player, a DVD player, or an MD player.

In general, the right to distribute the contents such as musical data and pictures is owned by authors of the contents or distributors of the contents. Thus, in distribution of these contents, predetermined utilization limitations are imposed. That is to say, such limitations set a system in which the right to use a content is given only to an authorized user to avoid illegal copies of the content.

Particularly, in recent years, a recording apparatus and a recording medium for recording information as digital data have becoming popular. In accordance with such a recording apparatus and a recording medium, for example, information can be recorded and reproduced repeatedly a number of times without deteriorating the quality of the pictures and sounds. In consequence, there is raised a problem that an illegally copied content is circulated through the Internet, and a large number of so-called pirated discs are distributed. A pirated disc is produced by copying a content onto typically a CD-ROM.

Specially, in the case of a large-capacity recording medium such as a DVD developed in recent years, a large amount of data of a movie can be recorded onto a piece of recording media as digital information. If data such as video information can be recorded as digital information as described above, avoidance of an illegal copy and protection of a copyright becomes a more important problem.

In accordance with the digital recording medium and the recording apparatus for recording and reproducing digital data onto and from the medium, the digital data can be recorded and reproduced repeatedly a number of times without deteriorating the quality of the pictures and sounds. Since digital data can be copied repeatedly a number of times by maintaining its picture and sound qualities, recording mediums each containing an illegal copy may be sold in the market. In this case, interests of people owning copyrights of various contents such as musical data and movies and people owning proper rights to sell the contents are infringed. Nowadays, a variety of technologies have been put to practice as technologies for preventing the digital recording apparatus and the recording medium from being used as tools for making an illegal copy so as to avoid an illegal copy of such digital data.

In a DVD player, for example, a content scramble system is adopted. In the content scramble system, video and audio data is encrypted and recorded on a DVD-ROM (Read Only Memory). A key for decrypting the encrypted video and audio data is given to a DVD player granted a license. A license is given to a DVD player designed to abide by predetermined operating prescriptions such as making no illegal copies. Thus, a DVD player granted a license is capable of decrypting encrypted video and audio data recorded on a DVD-ROM by using a key given to the player to reproduce the data from the DVD-ROM.

On the other hand, a DVD player not granted a license is not capable of decrypting encrypted video and audio data recorded on a DVD-ROM since the player does not have a key for decrypting the data. In this way, in the configuration of the content scramble system, a DVD player not satisfying conditions requested at a licensing time is not capable of reproducing digital data from a DVD-ROM, contributing to avoidance of illegal copies.

However, a content scramble system intended for DVD-ROMs has recording mediums, which disallow the user to write data thereon, as a target and does not consider recording mediums, which allow the user to write data thereon, as its target.

That is to say, even if data recorded on a recording medium allowing the user to write data thereon is encrypted data, by copying the entire encrypted data to a RAM medium as it is, a proper apparatus granted a license is capable of reproducing the data from the RAM medium. Thus, this process allows creating the RAM medium as the so-called pirated version of the data.

In addition, a software program for resolving CSS encryption is distributed through the Internet. An example of the software program is DeCSS software. By using this program, DVD video encrypted code can be decrypted to generate code to be written onto a recording-type DVD in a clear-text format. The DeCSS software was created as follows. A key for CSS decryption should have been naturally encrypted. DVD player software designed with the CSS decryption key unencrypted as it is was subjected to a reverse engineering process to decode the key. From the decoded key, an entire CSS algorithm was decoded in a chaining way to lead to creation of the DeCSS software.

When a copyright protection technology execution program including a key is incorporated in an application program to be executed on a PC, a tamper-proof characteristic for preventing a copyright protection technology from being analyzed is generally brought about. However, there is no indicator indicating the strength of the tamper-proof characteristic. Thus, in the present state of the art, a capability of coping with the reverse engineering is left to determination and real ability of individual implementers. As a result, the CSS collapsed, leading to flood of illegally copied contents.

In systems other than the CSS, a CPPM (Content Protection for Prerecorded Media) and a CPRM (Content Protection for Recordable Media) are available as a copyright technology or a copy control technology adopted in DVD specifications. The CPPM is a copy control technology developed for reproduction-only media or prerecorded media. On the other hand, the CPRM is a copy control technology developed for recordable media. These copy control technologies execute copy control by using a combination of key information and a device key. The key information is a media key block stored in media such as a disc. On the other hand, the device key is a key stored in a device such as a reproduction apparatus or a PC.

Also in the CPRM and the CPPM described above, however, no technology for solving the basic problems has been proposed. The problems include the danger of leaking the key information stored in media such as a disc or stored in a device such as a PC. Thus, in the present state of the art, even in the case of the CPRM and the CPPM, there is always a danger of leaking a key to cause the copy control system to collapse.

It is to be noted that, as a technology for preventing a content from being used illegally, documents such as patent references 1 and 2 describe an encryption-processing technology applying a unique key to each data block of a content stored on a recording medium. Patent reference 1 is Japanese Patent Laid-open No. 2001-351324 and patent reference 2 is Japanese Patent Laid-open No. 2002-236622. The disclosed technology provides a configuration in which a seed is set as key generation information for each data block, and the seed set for each data block is used in generation of an encryption key. This technology thus complicates the conventional content encryption process using one key and increases the difficulty to decode the encryption algorithm for the process.

In the configuration described above, however, a seed set as key generation information for each data block is no other than information stored in the recording medium. Thus, much like the aforementioned background of the collapse of the CSS, key data is decoded, and a block key can be derived from the decoded key data and a seed unique to the data block. Thus, it cannot be said that there is no fear at all for leaking a content.

### Disclosure of Invention

It is thus an object of the present invention addressing the problems described above to provide an information-processing apparatus, an information-recording medium drive, an information-recording medium, an information-processing method, and a computer program capable of making it more difficult to leak key information applied to encryption of a content to be stored in a recording medium and capable of increasing a difficulty to decode the key information as well as a difficulty to decode an encryption algorithm in a configuration in which contents recorded in a variety of recording mediums such as a DVD and a CD are used in a reproduction apparatus or a PC (Personal Computer).

In accordance with a first aspect of the present invention, there is provided an information-processing apparatus used for carrying out a process to decrypt encrypted data stored on an information-recording medium. The information-processing apparatus has encryption-processing means for:
generating a first block key Kb1 on the basis of a first seed serving as key generation information set for each of encryption-processing units composing the encrypted data stored on the information-recording medium;
acquiring a second seed by carrying out a process to decrypt an encrypted second seed stored on the information-recording medium on the basis of the generated first block key Kb1;
generating a second block key Kb2 based on the acquired second seed; and
decrypting the encrypted data stored on the information-recording medium by carrying out a decryption process based on the generated second block key Kb2.

In addition, in accordance with an embodiment implementing the information-processing apparatus provided by the present invention has storage means for storing master-key generation information. The encryption-processing means also:
generates a master key on the basis of the master-key generation information;
generates two recording keys K1 and K2 on the basis of the generated master key and information read out from the information-recording medium;
generates a first block key Kb1 by carrying out an encryption process based on the generated first recording key K1 and the first seed;
acquires a second seed by carrying out a process to decrypt an encrypted second seed stored on the information-recording medium on the basis of the generated first block key Kb1;
generates a second block key Kb2 by carrying out an encryption process based on the acquired second seed and the generated second recording key K2; and
decodes encrypted data stored on the information-recording medium by carrying out a decryption process based on the generated second block key Kb2.

Furthermore, in accordance with another embodiment implementing the information-processing apparatus provided by the present invention, the encryption-processing means also:
generates a first title unique key and a second title unique key on the basis of the master key, a disc ID, which is information read out from the information-recording medium, and two title keys recorded on the information-recording medium;
generates a first recording key K1 by carrying out an encryption process based on the first title unique key and first information read out from the information-recording medium; and
generates a second recording key K2 by carrying out an encryption process based on the second title unique key and second information read out from the information-recording medium.

Moreover, in accordance with a further embodiment implementing the information-processing apparatus provided by the present invention, the encryption-processing means also:
generates a first title unique key and a second title unique key on the basis of the master key, a disc ID, which is information read out from the information-recording medium, and one key seed recorded on the information-recording medium;
generates a first recording key K1 by carrying out an encryption process based on the first title unique key and first information read out from the information-recording medium; and
generates a second recording key K2 by carrying out an encryption process based on the second title unique key and second information read out from the information-recording medium.

In accordance with a second aspect of the present invention, there is provided an information-recording medium drive used for reading out encrypted data from an information-recording medium and outputting the encrypted data to an external apparatus. The information-recording medium drive has a configuration including:
an authentication-processing unit for carrying out an authentication process with the external apparatus to receive the encrypted data read out from the information-recording medium in order to generate a session key Ks; and
encryption-processing means for:
   generating a first block key Kb1 on the basis of a first seed serving as key generation information set for each of encryption-processing units composing the encrypted data stored on the information-recording medium;
   acquiring a second seed by carrying out a process to decrypt an encrypted second seed stored on the information-recording medium on the basis of the generated first block key Kb1; and
   generating output-use encrypted information by carrying out a process to encrypt data including the second seed on the basis of the session key Ks.

The output-use encrypted information obtained as a result of the process to encrypt data including the second seed on the basis of the session key Ks is output through an interface.

In addition, in accordance with an embodiment implementing the information-recording medium drive provided by the present invention, the encryption-processing means also:
generates a master key on the basis of master-key generation information held by the information-recording medium drive;
generates two recording keys K1 and K2 on the basis of the master key and information read out from the information-recording medium;
generates a first block key Kb1 by carrying out an encryption process based on the generated first recording key K1 and the first seed;
acquires a second seed by carrying out a process to decrypt an encrypted second seed stored on the information-recording medium on the basis of the generated first block key Kb1;
generates output-use encrypted information by encrypting data including the second seed and the second recording key K2 on the basis of the session key Ks; and
outputs the output-use encrypted information including the second seed and the second recording key K2 through an interface.

In accordance with a third aspect of the present invention, there is provided an information-processing apparatus used for carrying out a process to decrypt encrypted data received from an external apparatus through a data input interface. The information-processing apparatus includes:
an authentication-processing unit for carrying out an authentication process with the external apparatus outputting the encrypted data in order to generate a session key Ks; and
an encryption-processing unit for:
   acquiring a seed used as key generation information and a recording key by carrying out a process based on the session key to decrypt encrypted information received through the data input interface;
   generating a block key to be used as a decryption key for decryption of encrypted data by carrying out an encryption process based on the seed and the recording key; and carrying out a process based on the block key to decrypt encrypted data.

In accordance with a fourth aspect of the present invention, there is provided an information-recording medium drive used for reading out encrypted data from an information-recording medium and outputting the encrypted data to an external apparatus. The information-recording medium drive has a configuration including:
an authentication-processing unit for carrying out an authentication process with the external apparatus to receive the encrypted data read out from the information-recording medium in order to generate a session key Ks; and
encryption-processing means for:
   generating a block key on the basis of a seed serving as key generation information set for each of encryption-processing units composing the encrypted data stored on the information-recording medium;
   acquiring decrypted data by carrying out a process to decrypt the encrypted data stored on the information-recording medium on the basis of the generated block key; and
   generating output-use encrypted information by carrying out a process to encrypt the decrypted data on the basis of the generated session key Ks.

The output-use encrypted information obtained as a result of the process to encrypt the decrypted data on the basis of the session key Ks is output through an interface.

In accordance with a fifth aspect of the present invention, there is provided an information-recording medium used for storing encrypted data. The information-recording medium includes a configuration for storing:
a first seed serving as key generation information set for each of encryption-processing units composing the encrypted data;
a second seed serving as key generation information encrypted on the basis of a first block key Kb1 generated on the basis of the first seed; and
an encrypted content encrypted on the basis of a second block key Kb1 generated on the basis of the second seed.

In addition, in accordance with an embodiment implementing the information-recording medium provided by the present invention, the first seed is stored inside control information set for each of encryption-processing units whereas the second seed is stored as encrypted information in a user-data area outside the control information.

On the top of that, in accordance with another embodiment implementing the information-recording medium provided by the present invention, the first seed is stored in a user-data area as unencrypted data whereas the second seed is stored in the user-data area as encrypted data.

Furthermore, in accordance with a further embodiment implementing the information-recording medium provided by the present invention, the encrypted data is a transport stream packet, the first seed is stored inside control information for a plurality of transport stream packets, and the second seed is stored as encrypted information inside one of the transport stream packets in a user-data area outside the control information.

Moreover, in accordance with a still further embodiment implementing the information-recording medium provided by the present invention, the first seed is stored inside a transport stream packet in a user-data area as unencrypted data whereas the second seed is stored as encrypted information inside the transport stream packet in the user-data area.

In accordance with a sixth aspect of the present invention, there is provided an information-processing method used for carrying out a process to decrypt encrypted data stored on an information-recording medium. The information-processing method includes the steps of:
generating a first block key Kb1 on the basis of a first seed serving as key generation information set for each of encryption-processing units composing the encrypted data stored on the information-recording medium;
acquiring a second seed by carrying out a process to decrypt an encrypted second seed stored on the information-recording medium on the basis of the generated first block key Kb1;
generating a second block key Kb2 based on the acquired second seed; and
decrypting the encrypted data stored on the information-recording medium by carrying out a decryption process based on the generated second block key Kb2.

In addition, in accordance with an embodiment implementing the information-processing method provided by the present invention, the information-processing method further has the steps of:
generating a master key on the basis of master-key generation information read out from storage means;
generating two recording keys K1 and K2 on the basis of the generated master key and information read out from the information-recording medium;
generating a first block key Kb1 by carrying out an encryption process based on the generated first recording key K1 and the first seed;
acquiring a second seed by carrying out a process to decrypt an encrypted second seed stored on the information-recording medium on the basis of the generated first block key Kb1;
generating a second block key Kb2 by carrying out an encryption process based on the acquired second seed and the generated second recording key K2; and
decrypting the encrypted data stored on the information-recording medium by carrying out a decryption process based on the generated second block key Kb2.

Furthermore, in accordance with another embodiment implementing the information-processing method provided by the present invention, the information-processing method further has the steps of:
generating a first title unique key and a second title unique key on the basis of the master key, a disc ID, which is information read out from the information-recording medium, and two title keys recorded on the information-recording medium;
generating a first recording key K1 by carrying out an encryption process based on the first title unique key and first information read out from the information-recording medium; and
generating a second recording key K2 by carrying out an encryption process based on the second title unique key and second information read out from the information-recording medium.

Moreover, in accordance with a further embodiment implementing the information-processing method provided by the present invention, the information-processing method further has the steps of:
generating a first title unique key and a second title unique key on the basis of the master key, a disc ID, which is information read out from the information-recording medium, and one key seed recorded on the information-recording medium;
generating a first recording key K1 by carrying out an encryption process based on the first title unique key and first information read out from the information-recording medium; and
generating a second recording key K2 by carrying out an encryption process based on the second title unique key and second information read out from the information-recording medium.

In accordance with a seventh aspect of the present invention, there is provided an information-processing method used for reading out encrypted data from an information-recording medium and outputting the encrypted data to an external apparatus. The information-processing method includes the steps of:
carrying out an authentication process with the external apparatus to receive the encrypted data read out from the information-recording medium in order to generate a session key Ks; and
generating a first block key Kb1 on the basis of a first seed serving as key generation information set for each of encryption-processing units composing the encrypted data stored on the information-recording medium;
acquiring a second seed by carrying out a process to decrypt an encrypted second seed stored on the information-recording medium on the basis of the generated first block key Kb1;
generating output-use encrypted information by carrying out a process to encrypt data including the second seed on the basis of the session key Ks; and
outputting the output-use encrypted information obtained as a result of the process to encrypt data including the second seed on the basis of the session key Ks through an interface.

In addition, in accordance with an embodiment implementing the information-processing method provided by the present invention, the information-processing method further includes the steps of:
generating a master key on the basis of master-key generation information held by an information-recording medium drive;
generating two recording keys K1 and K2 on the basis of the master key and information read out from the information-recording medium;
generating a first block key Kb1 by carrying out an encryption process based on the generated first recording key K1 and the first seed;
acquiring a second seed by carrying out a process to decrypt an encrypted second seed stored on the information-recording medium on the basis of the generated first block key Kb1;
generating output-use encrypted information by encrypting data including the second seed and the second recording key K2 on the basis of the session key Ks; and
outputting the output-use encrypted information including the second seed and the second recording key K2 through an interface.

In accordance with an eighth aspect of the present invention, there is provided an information-processing method used for carrying out a process to decrypt encrypted data received from an external apparatus through a data input interface. The information-processing method includes the steps of:
carrying out an authentication process with the external method outputting the encrypted data in order to generate a session key Ks;
acquiring a seed used as key generation information and a recording key by carrying out a process based on the session key to decrypt encrypted information received through the data input interface;
generating a block key to be used as a decryption key for decryption of encrypted data by carrying out an encryption process based on the seed and the recording key; and
carrying out a process based on the block key to decrypt encrypted data.

In accordance with a ninth aspect of the present invention, there is provided an information-processing method used for reading out encrypted data from an information-recording medium and outputting the encrypted data to an external apparatus. The information-processing method includes the steps of:
carrying out an authentication process with the external method to receive the encrypted data read out from the information-recording medium in order to generate a session key Ks;
generating a block key on the basis of a seed serving as key generation information set for each of encryption-processing units composing the encrypted data stored on the information-recording medium;
acquiring decrypted data by carrying out a process to decrypt encrypted data stored on the information-recording medium on the basis of the generated block key;
generating output-use encrypted information by carrying out a process to encrypt the decrypted data on the basis of the generated session key Ks; and
outputting the output-use encrypted information obtained as a result of the process to encrypt the decrypted data on the basis of the session key Ks through an interface.

In accordance with a tenth aspect of the present invention, there is provided a computer program, which is to be executed for carrying out a process to decrypt encrypted data stored on an information-recording medium. The computer program includes the steps of:
generating a first block key Kb1 on the basis of a first seed serving as key generation information set for each of encryption-processing units composing the encrypted data stored on the information-recording medium;
acquiring a second seed by carrying out a process to decrypt an encrypted second seed stored on the information-recording medium on the basis of the generated first block key Kb1;
generating a second block key Kb2 based on the acquired second seed; and
decrypting the encrypted data stored on the information-recording medium by carrying out a decryption process based on the generated second block key Kb2.

In accordance with the configuration of the present invention, the present invention is implemented as an embodiment in which a seed (seed 2) required for generating a key (block key Kb2) to be applied to a process to decrypt an encrypted content is encrypted by using another key (block key Kb1) and stored on a disc. Thus, the unencrypted seed (seed 2) cannot be read out without decryption from the disc. As a result, difficulties to analyze the key generated by using the seed and analyze an encryption algorithm are increased and protection of a content can be implemented at a high level of security.

In accordance with the configuration of the present invention, if the present invention is implemented as an embodiment in which a seed (seed 2) required for generating a key (block key Kb2) to be applied to a process to decrypt an encrypted content needs to be transferred from a device to another, block-key generation information, that is, to put it concretely, both a seed (seed 2) and a recording key K2, are encrypted by using a session key before being transferred. Thus, even if data leaks from a transmission line, it is difficult to acquire the seed (seed 2) and the recording key K2. As a result, difficulties to analyze the key generated by using the seed and analyze an encryption algorithm are increased and protection of a content can be implemented at a high level of security.

It is to be noted that the computer program provided by the present invention can be presented to a general-purpose computer system, which is typically capable of executing various kinds of program code, by using a recording medium or a communication medium in a state of being executable by a computer. Examples of the recording medium include a CD, a DVD, and an MO whereas an example of the communication medium is a network. By presenting the computer program in the state of being executable by a computer in this way, processing corresponding to the computer program can be carried out in the computer system.

Other objects of the present invention, its characteristics, and merits thereof will probably become apparent from later description of embodiments of the present invention with reference to diagrams. It is to be noted that the technical term 'system' used in this description means the configuration of a logical set of a plurality of apparatus, but the apparatus composing the system are not necessarily incorporated in the same physical cabinet.

### Brief Description of Drawings

Figs. 1(a), 1(b), and 1(c) are explanatory diagrams referred to in describing the structure of data stored on an information-recording medium;
Fig. 2 is an explanatory diagram referred to in describing a typical configuration of an information-processing apparatus;
Fig. 3 is an explanatory diagram referred to in describing a decryption process carried out by the information-processing apparatus;
Figs. 4(a) and 4(b) are explanatory diagrams referred to in describing a typical process to generate a disc unique key;
Figs. 5(a) and 5(b) are explanatory diagrams referred to in describing a typical process to generate a recording key;
Fig. 6 is an explanatory diagram referred to in describing a data-recording process using a recording key;
Figs. 7(a) and 7(b) are explanatory diagrams referred to in describing a typical process to generate a title unique key;
Fig. 8 is an explanatory diagram referred to in describing a sequence of processes to decrypt encrypted data;
Fig. 9 is an explanatory diagram referred to in describing a sequence of processes to decrypt encrypted data;
Figs. 10(a) and 10(b) are explanatory diagrams referred to in describing the structure of data stored on an information-recording medium;
Fig. 11 is an explanatory diagram referred to in describing a decryption process carried out by the information-processing apparatus;
Fig. 12 is an explanatory diagram referred to in describing a sequence of processes to decrypt encrypted data;
Figs. 13(a), 13(b), and 13(c) are explanatory diagrams referred to in describing a typical storage configuration of a seed;
Figs. 14(d), 14(e), and 14(f) are explanatory diagrams referred to in describing another typical storage configuration of a seed;
Figs. 15(g), 15(h), and 15(i) are explanatory diagrams referred to in describing a further typical storage configuration of a seed;

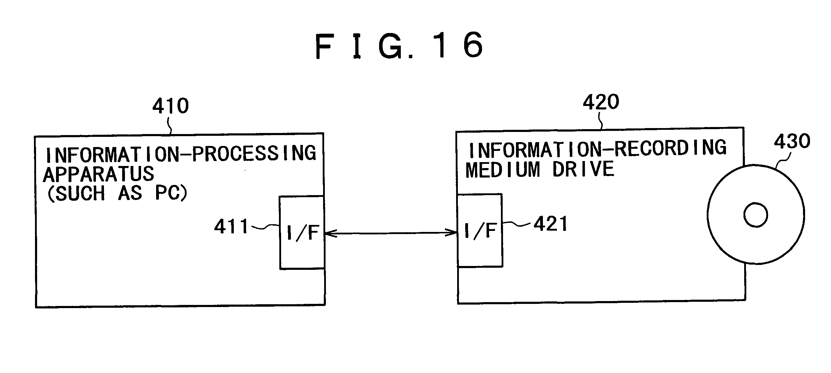

Fig. 16 is an explanatory diagram referred to in describing a configuration connecting an information-recording medium drive to an information-processing apparatus;
Fig. 17 is an explanatory diagram referred to in describing a process to transfer data between the information-recording medium drive and the information-processing apparatus;
Fig. 18 is an explanatory diagram referred to in describing a sequence of decryption processes accompanying the process to transfer data between the information-recording medium drive and the information-processing apparatus;
Fig. 19 is an explanatory diagram referred to in describing a sequence of processes of authentication between the information-recording medium drive and the information-processing apparatus;
Fig. 20 is an explanatory diagram referred to in describing another sequence of decryption processes accompanying the process to transfer data between the information-recording medium drive and the information-processing apparatus;
Fig. 21 is an explanatory diagram referred to in describing a further sequence of decryption processes accompanying the process to transfer data between the information-recording medium drive and the information-processing apparatus;
Fig. 22 is an explanatory diagram referred to in describing a still further sequence of decryption processes accompanying the process to transfer data between the information-recording medium drive and the information-processing apparatus; and
Fig. 23 is an explanatory diagram referred to in describing a still further sequence of decryption processes accompanying the process to transfer data between the information-recording medium drive and the information-processing apparatus.

### Best Modes for Carrying out the Invention

### [Structure of Data Recorded on a Recording Medium]

First of all, the structure of data recorded on an information-recording medium provided by the present invention is explained. Encrypted data stored on an information-recording medium is read out, decoded, and reproduced by a data-recording/reproduction apparatus or a PC (Personal Computer).

Data stored on an information-recording medium is a TS (Transport Stream) of coded data conforming to typically an MPEG-2 system. A transport stream can have a configuration including a plurality of programs on one stream. In the transport stream, ATSes (Arrival Time Stamps) are set as information on timings of appearances of transport packets. A time stamp is determined at an encoding time so as not to cause an T-STD (Transport stream-System Target Decoder) to fail. The T-STD is a virtual decoder prescribed in the MPEG-2 system. In an operation to reproduce a stream, appearance timings are controlled in accordance with an ATS added to each transport packet of the stream, and the stream is decoded to generate a reproduction result.

In a process to record transport stream packets on a recording medium, for example, the packets are packed as source packets by squeezing gaps between the packets. By also saving a timing of appearance of each transport packet onto the recording medium, however, the timings of appearances of the transport packets can be controlled during a reproduction process.

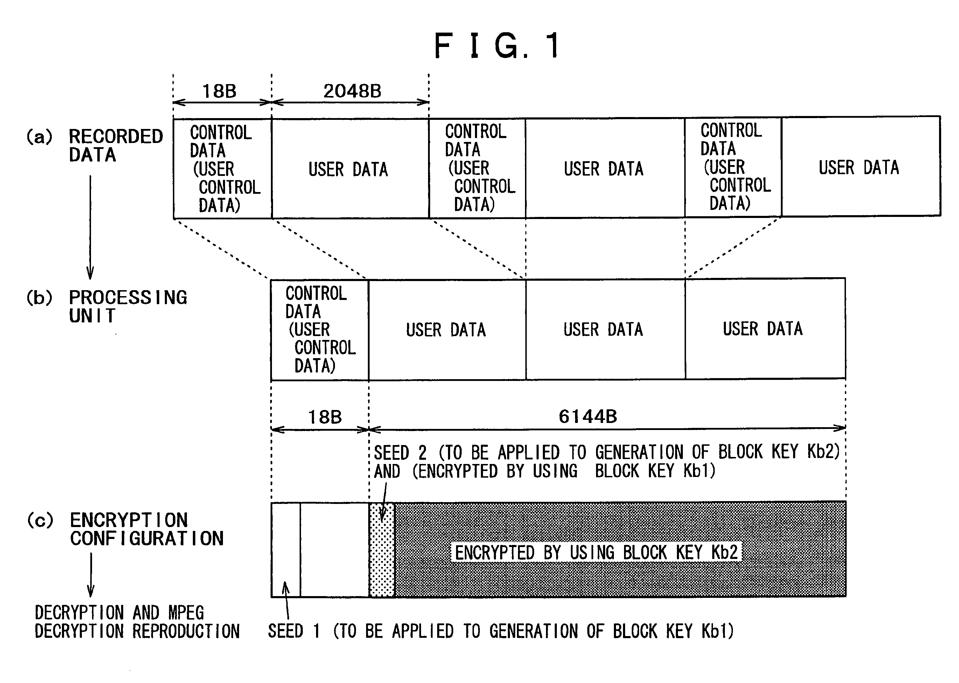

By referring to Figs. 1(a), 1(b), and 1(c), the following description explains the structure of data stored on an information-recording medium as well as an outline of a process to decrypt and reproduce the data. Since the data stored on the information-recording medium is encrypted data, it is necessary to carry out a process to decrypt the data in order to reproduce the data. Fig. 1(a) shows the structure of data stored on the information-recording medium. User control data having a length of 18 bytes and user data having a size of 2048 bytes form data of one sector, and data of typically three sectors is prescribed as an encryption-processing unit. It is to be noted that the byte counts and the size of the encryption-processing unit are each a typical number. That is to say, the sizes of the user control data, the user data, and the encryption-processing unit can be set at any of a variety of values.

On the other hand, Fig. 1(b) shows the structure of an AU (Aligned Unit) used as the encryption-processing unit. An information-processing apparatus reproducing encrypted data stored on an information-recording medium extracts one AU used as the encryption-processing unit on the basis of a flag included in the user control data.

Fig. 1(c) shows an encrypted configuration. As shown in the figure, one AU used as the encryption-processing unit includes an area encrypted by using a block key Kb1 and an area encrypted by using a block key Kb2. 1 AU may also include an area encrypted twice by using the block keys Kb1 and Kb2. In order to generate a block key, a seed is required as key generation information. A seed (seed 1) is key generation information for generating the block key Kb1, and a seed (seed 2) is key generation information for generating the block key Kb2. These seeds are stored in a control area or a user data area. A configuration of storage and encryption states of seeds shown in Fig. 1(c) is a typical configuration. A plurality of other typical configurations will be described later.

In order to decrypt an encrypted content stored in the user-data area, it is necessary to read out seeds from the information-recording medium and generate keys on the basis of the seeds.

In the configuration of the present invention, the seed (seed 1) required for generating the block key Kb1 as well as the seed (seed 2) required for generating the block key Kb2 are stored on the information-recording medium, and one of the seeds, that is seed 2, is information encrypted by using the block key Kb1 generated by the other key (seed 1) as shown in Fig. 1(c).

As described above, in the configuration of the present invention, data obtained as a result of an encryption process utilizing two different keys is stored on a recording medium, and a decryption process is carried out by using the two different keys in reproduction processing. To put it in detail, first of all, the block keys Kb1 and Kb2 are generated by carrying out an encryption process applying seeds 1 and 2, which are different pieces of key generation information set for each predetermined encryption-processing unit, and the decryption process is carried out by using the block keys Kb1 and Kb2.

After the process to decrypt each encryption-processing unit, decoded transport-stream packets are supplied to an MPEG-2 decoder for carrying out a decoding process to reproduce a content. Typically, one encryption-processing unit occupying three sectors includes 32 TS (Transport Stream) packets. That is to say, data with a size of 6144 (= 32 × 192) bytes is treated as one encryption/decryption-processing unit. It is to be noted that the processing unit can be set at any one of a variety of values.

At a decryption/reproduction time, for each processing unit, two seeds (seeds 1 and 2) are acquired from the information-recording medium and two block keys Kb1 and Kb2 are generated on the basis of their respective seeds. Then, by using the generated block keys Kb1 and Kb2, the decryption process is carried out to reproduce a content.

In addition, at a content-recording time, a reversed process opposite to the decryption process is carried out. That is to say, two seeds (seeds 1 and 2) are set for each of processing units, two block keys Kb1 and Kb2 are generated on the basis of the seeds, a process to encrypt the content by using the block keys Kb1 and Kb2 is carried out, and the encrypted content is recorded onto the information-recording medium. [Configuration of the Information-Processing Apparatus]

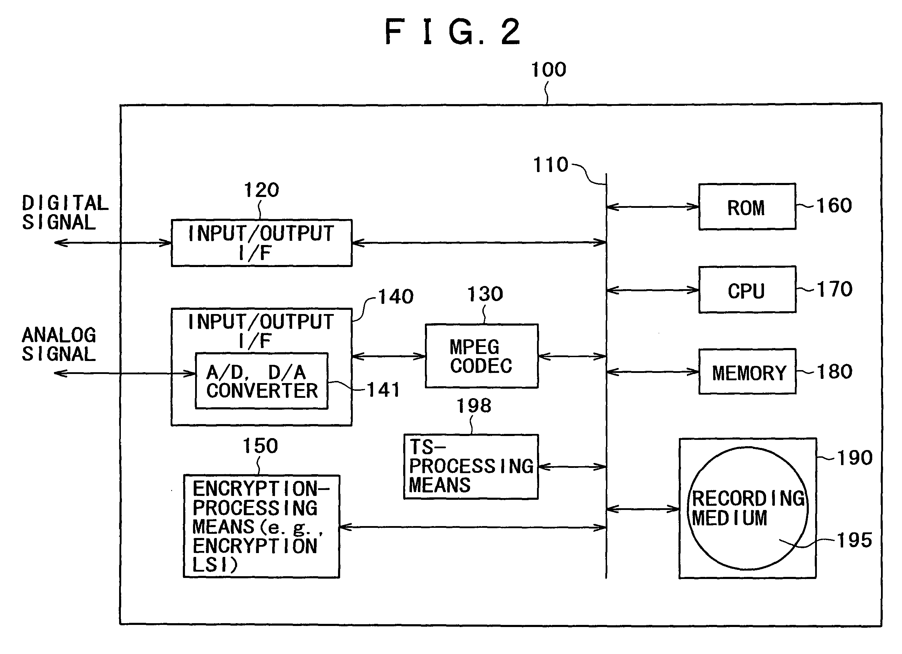

Fig. 2 is a block diagram showing a typical configuration of an information-processing apparatus 100 for carrying out processes to record and reproduce a content having an encrypted content configuration described above. The information-processing apparatus 100 includes an input/output I/F (interface) 120, an MPEG (Moving Picture Experts Group) codec 130, another input/output interface 140 including an A/D-D/A converter 141, encryption-processing means 150, a ROM (Read Only Memory) 160, a CPU (Central Processing Unit) 170, a memory 180, a drive 190 for driving a recording medium 195, and TS (Transport Stream)-processing means 198. These components are connected to each other by a bus 110.

The input/output I/F 120 receives digital signals representing a variety of contents such as a picture, a sound, and a program from an external source and outputs the signals to the bus 110. On the other hand, the input/output I/F 120 receives a digital signal from the bus 110 and outputs the signal to an external destination. The MPEG codec 130 carries out an MPEG-decoding process on data received from the bus 110 as data obtained as a result of an MPEG-encoding process and outputs a result of the MPEG-decoding process to the input/output I/F 140. On the other hand, the MPEG codec 130 carries out an MPEG-encoding process on a digital signal received from the input/output I/F 140 and outputs a result of the MPEG-encoding process to the bus 110. As described above, the input/output I/F 140 includes the A/D-D/A converter 141 embedded therein. The input/output I/F 140 receives an analog signal representing a content supplied by an external source, and the A/D-D/A converter 141 carries out an A/D (Analog to Digital) conversion process to convert the analog signal into a digital signal, supplying the digital signal to the MPEG codec 130. On the other hand, the A/D-D/A converter 141 carries out a D/A (Digital to Analog) conversion process to convert a digital signal received from the MPEG codec 130 into an analog signal and supplies the analog signal to an external destination.

The encryption-processing means 150 typically has the configuration of an LSI (Large Scale Integrated) circuit created on one chip. The encryption-processing means 150 encrypts or decrypts a digital signal received from the bus 110 as a signal representing a content and outputs a result of encryption or decryption to the bus 110. It is to be noted that the implementation of encryption-processing means 150 is not limited to the configuration of an LSI circuit created on one chip. Instead, the encryption-processing means 150 can be implemented as a configuration including a combination of various kinds of software and various kinds of hardware. In addition, the encryption-processing means 150 also functions as an authentication-processing unit for carrying out an authentication process in operations to input and output contents from and to an external apparatus connected to the input/output I/F 120.

The ROM 160 is used for storing a unique device key peculiar to the information-processing apparatus or peculiar to a group of information-processing apparatus and an authentication key required in a mutual authentication process. The device key is used for acquiring a master key by decrypting an EKB (Enabling Key Block) for example on the basis of a key distribution tree structure. That is to say, the device key is applied as information for generating a master key. The EKB is an encrypted-key block information.

The CPU 170 controls components such as the MPEG codec 130 and the encryption-processing means 150 by execution of a program stored in the memory 180. The memory 180 is typically a non-volatile memory used for storing a program to be executed by the CPU 170 and data required in operations carried out by the CPU 170. The drive 190 drives the recording medium 195, which can read out and write digital data, in order to read out (or reproduce) digital data from the recording medium 195 and output the data to the bus 110 or in order to write (or record) digital data received from the bus 110 onto the recording medium 195. It is to be noted that, the program may be stored in the ROM 160, and the master-key generation information and the authentication key may be stored in the memory 180.

The recording medium 195 is a medium that can be used for recording digital data. Examples of such a medium are an optical disc, a magneto-optical disc, a magnetic disc, a magnetic tape, and a semiconductor memory. Examples of the optical disc include a DVD and a CD whereas examples of the semiconductor memory are a flash ROM, an MRAM, and a RAM. In this embodiment, the recording medium 195 has a configuration allowing the recording medium 195 to be mounted and demounted on and from the drive 190. However, the recording medium 195 may also have a configuration embedded in the information-processing apparatus 100.

The TS (Transport Stream)-processing means 198 carries out data processing to fetch transport packets corresponding to a specific content from a transport stream including a plurality of multiplexed contents and to store appearance timings set on the extracted transport stream onto the recording medium 195 along with the packets. In addition, the TS-processing means 198 controls the appearance timings set on a transport stream in a process to decrypt and reproduce an encrypted content recorded on the recording medium 195.

As described earlier, ATSes (Arrival Time Stamps) each serving as a timing of appearance of a packet are set on a transport stream, and timings are controlled on the basis of the ATSes in a decoding process carried out by an MPEG2 decoder. In a process to record transport packets on a recording medium, for example, the TS (Transport Stream)-processing means 198 records the packets on the recording medium by squeezing gaps between the packets in order to pack the packets as source packets. By also saving a timing of appearance of each transport packet onto the recording medium, however, the timings of appearances of the transport packets can be controlled during a reproduction process.

The information-processing apparatus 100 provided by the present invention carries out processes to record and reproduce an encrypted content onto and from the recording medium 195. Typically, the encrypted content has a configuration including the transport stream described above. Details of these processes will be described later. It is to be noted that, while the encryption-processing means 150 and the TS-processing means 198 shown in Fig. 2 are shown as separate blocks in order to make the explanation easy to understand, they can also be put in a configuration implemented as a one-chip LSI circuit for carrying out the functions of both the encryption-processing means 150 and the TS-processing means 198. In addition, the functions of both the encryption-processing means 150 and the TS-processing means 198 can also be implemented in a configuration including a combination of various kinds of software and various kinds of hardware. Furthermore, all functional blocks of the drive 190 excluding the recording medium 195 can also be put in a configuration implemented as an LSI circuit created in one chip or a configuration including a combination of various kinds of software and various kinds of hardware. In this way, it is possible to enhance robustness against defeasance of the security function due to reconstruction of the information-processing apparatus 100.

### [Data Reproduction Processing]

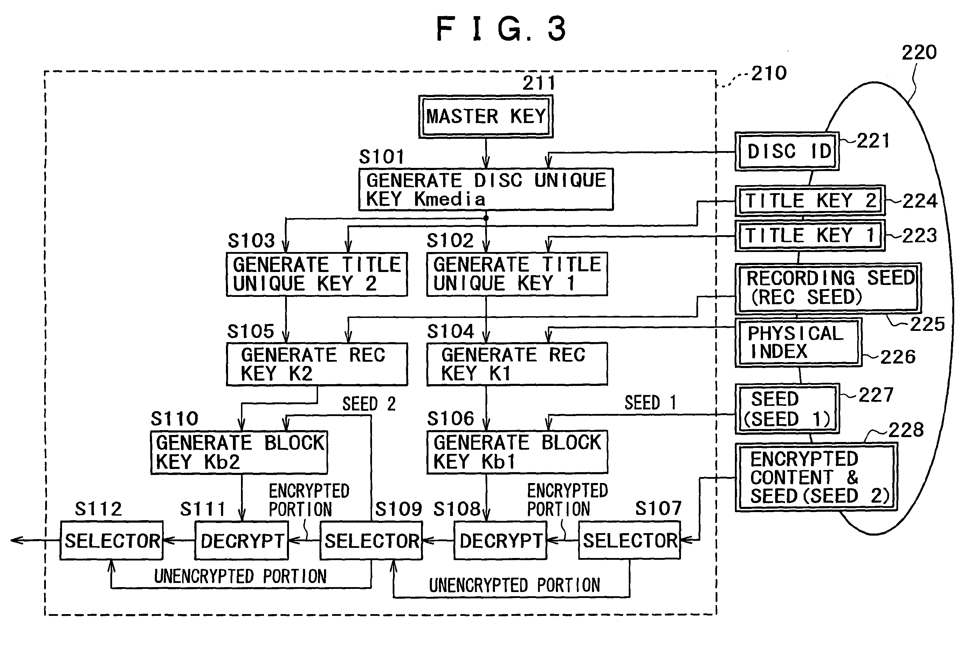

Next, a process to decrypt encrypted data stored on a recording medium is explained. Fig. 3 is an explanatory diagram showing the procedure of processing to decrypt data. The processing shown in Fig. 3 is a processing carried out mainly by the encryption-processing means 150 shown in Fig. 2.

First of all, the information-processing apparatus 210 reads out a master key 211 stored in its own memory 180 shown in Fig. 2. The master key 211 is a secret key stored on an information-processing apparatus granted a license. The master key 211 is a common key stored as a key common to a plurality of information-processing apparatus. Then, the information-processing apparatus 210 examines the information-recording medium 220 to determine whether or not a disc ID 221 has already been recorded on the information-recording medium 220 as an identification. If a disc ID 221 has already been recorded on the information-recording medium 220, the disc ID 221 is read out from the information-recording medium 220. The disc ID 221 is information peculiar to the information-recording medium 220 and typically stored in a general-data storage area or a lead-in area on the information-recording medium 220.

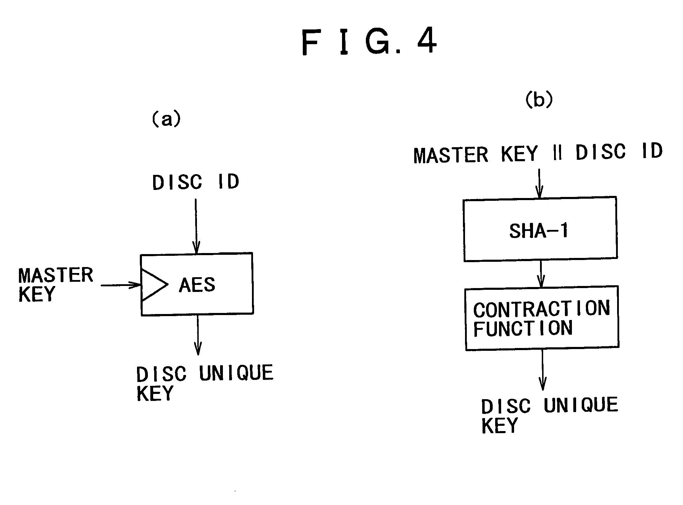

Then, at a step S101, the information-processing apparatus 210 generates a disc unique key by using the master key 211 and the disc ID 221. Typical concrete methods each applicable to generation of a disc unique key are shown in Figs. 4(a) and 4(b). Fig. 4(a) is a diagram showing an AES (Advanced Encryption Standard) encryption method receiving a disc ID as an input value and using a master key as an encryption key. Fig. 4(b) is a diagram showing a method whereby data obtained as a result of bit concatenation of a master key and a disc ID is supplied to hash function SHA-1 prescribed by FIPS 180-1 specifications, and a data portion having only a required length is extracted from the output of the hash function to be used as a disc unique key.

Then, two title keys peculiar to a recorded content are read out from the information-recording medium 220. The two title keys are title keys 1 and 2 denoted by reference numerals 223 and 224 respectively. The title keys are stored in a data management file existing on the information-recording medium 220 as a file for storing information indicating which title is assigned to which data. If only one pair of title keys exists for one disc, that is, if the title keys can be determined uniquely for the disc ID 221, the title keys can be stored on the information-recording medium 220 in the same way as the disc ID 221. To put it concretely, the pair of title keys can be stored in a general-data storage area or a lead-in area on the information-recording medium 220.

Then, two title unique keys 1 and 2 are generated from the disc unique key and the title keys 1 and 2 respectively at steps S102 and S103 respectively. Concrete methods that can be adopted for generating the title unique keys include a method using hash function SHA-1 and a method using a hash function based on block encryption.

Subsequently, at steps S104 and S105, the information-processing apparatus 210 generates two recording keys (REC keys) K1 and K2 respectively on the basis of the two title unique keys 1 and 2 generated at the steps S102 and S103 respectively and on the basis of a recording seed (REC SEED) 225 and a physical index 226, which are read out from the information-recording medium 220.

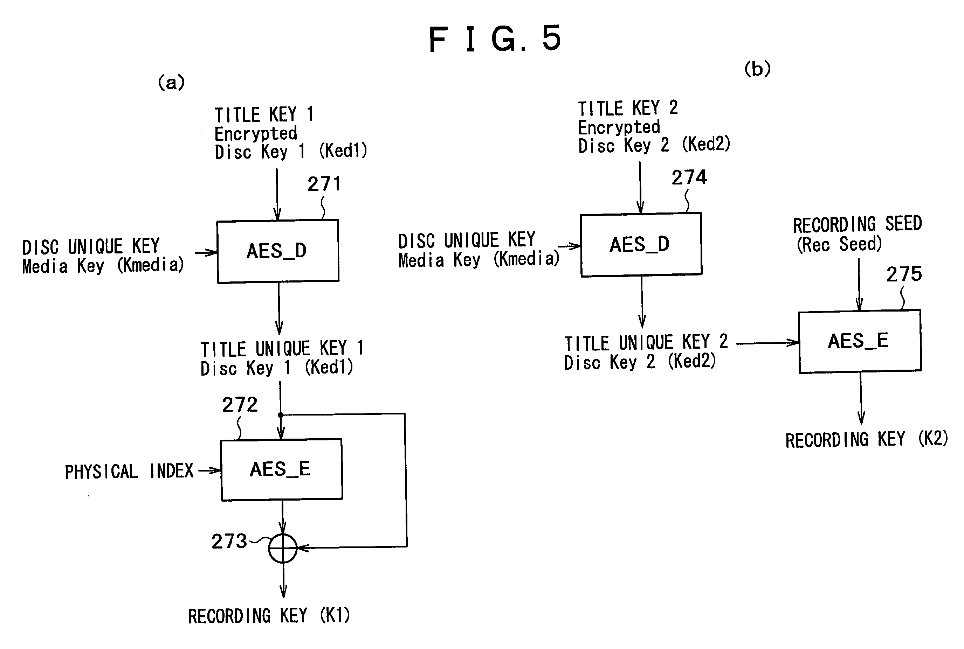

Typical processing carried out at the steps S102 to S105 to generate the two recording keys (REC keys) K1 and K2 is explained by referring to Figs. 5(a) and 5(b).

Fig. 5(a) is a diagram showing typical processing carried out at the steps S102 and S104 shown in Fig. 3 to generate the recording key K1 whereas Fig. 5(b) is a diagram showing typical processing carried out at the steps S103 and S105 shown in Fig. 3 to generate the recording key K2.

In the processing shown in Fig. 5(a), first of all, the title key 1 read out from the information-recording medium 220 is supplied to an AES (Advanced Encryption Standard)-encryption processor 271 for carrying out a decryption process applying the disc unique key generated at the step S101 on the title key 1 to generate a title unique key 1 at the step S102. Then, the physical index 226 read out from the information-recording medium 220 is supplied to an AES (Advanced Encryption Standard)-encryption processor 272 for carrying out an encryption process applying the title unique key 1. Finally, an exclusive-or unit 273 carries out an exclusive-or process on the result of the encryption process and the title unique key 1 at the step S104 to generate an output set as a recording key 1.

In the processing shown in Fig. 5(b), first of all, the title key 2 read out from the information-recording medium 220 is supplied to an AES (Advanced Encryption Standard)-encryption processor 274 for carrying out a decryption process applying the disc unique key generated at the step S101 on the title key 2 to generate a title unique key 2 at the step S103. Then, a recording seed (REC SEED) 225 read out from the information-recording medium 220 is supplied to an AES (Advanced Encryption Standard) encryption-processor 275 for carrying out an encryption process applying the title unique key 2 on the recording seed 225 to generate a recording key 2 at the step S105.

The recording keys K1 and K2 are required in the reproduction processing described above, and they are also keys applied to processing to encrypt a content to be recorded onto an information-recording medium.

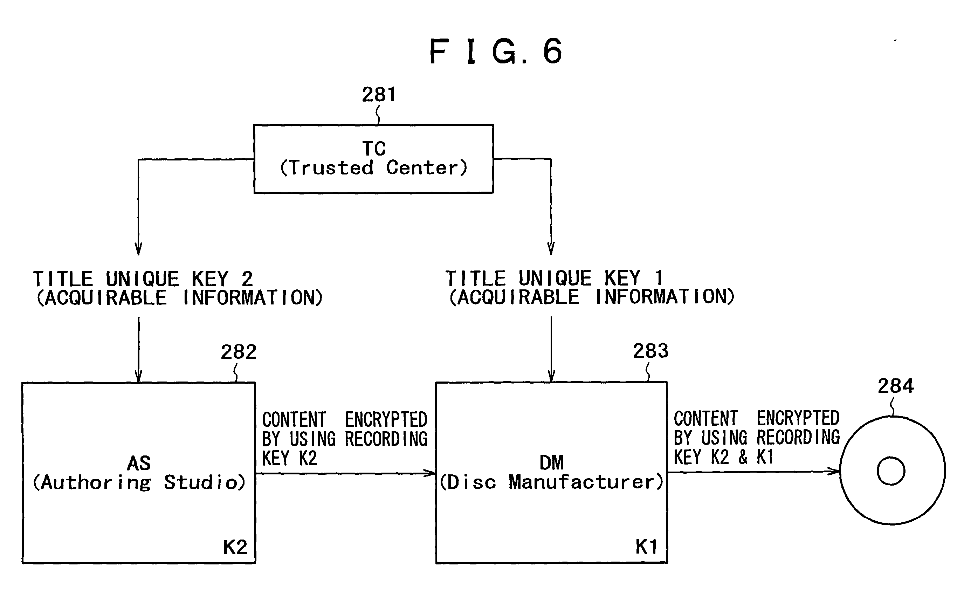

As shown in Fig. 6, first of all, a content to be encrypted and recorded onto an information-recording medium 284 is edited in an authoring studio 282. Then, the edited content is delivered to a disc manufacturer 283 such as a disc-manufacturing factory to be recorded onto the information-recording medium 284 such as a disc.

In this manufacturing process, the authoring studio 282 sets a physical index and carries out an encryption process applying the recording key K2 on the edited content to generate an encrypted edited content. Then, the disc manufacturer 283 sets a recording seed and carries out an encryption process applying the recording key K1 on the encrypted edited content. As a result, encrypted data obtained as a result of encryption processes using the recording keys K1 and K2 as two encryption keys is stored on the information-recording medium 284. In such a disc-manufacturing process, a trusted center 281 executing management of contents supplies the title unique key 2 as acquirable information to the authoring studio 282 and the title unique key 1 as acquirable information to the disc manufacturer 283.

The trusted center 281 executes such management of keys so that only the authoring studio 282 and the disc manufacturer 283, which recipients of keys from the trusted center 281, are capable of manufacturing an information-recording medium for storing an encrypted content. Accordingly, a pirated disc can be prevented from being manufactured by an unauthorized third person. In particular, the authoring studio 282 stores an edit ID in a TS packet of the edited content and carries out an encryption process on the edited content including the edit ID indicating which authoring studio has made the edited content. Thus, the encrypted edited content is delivered to the disc manufacturer 283 with the edit ID kept confidential as it is. As a result, it is possible to manage traces of contents received by the disc manufacturer 283.

It is to be noted that, in the example shown in Fig. 3, typical processing is carried out to compute two title unique keys on the basis of two title keys 1 and 2 stored in advance on the information-recording medium 220. However, it is possible to provide a configuration in which the two title unique keys are computed from only a stored piece of information without the need to store the two title keys 1 and 2 in advance on the information-recording medium 220.

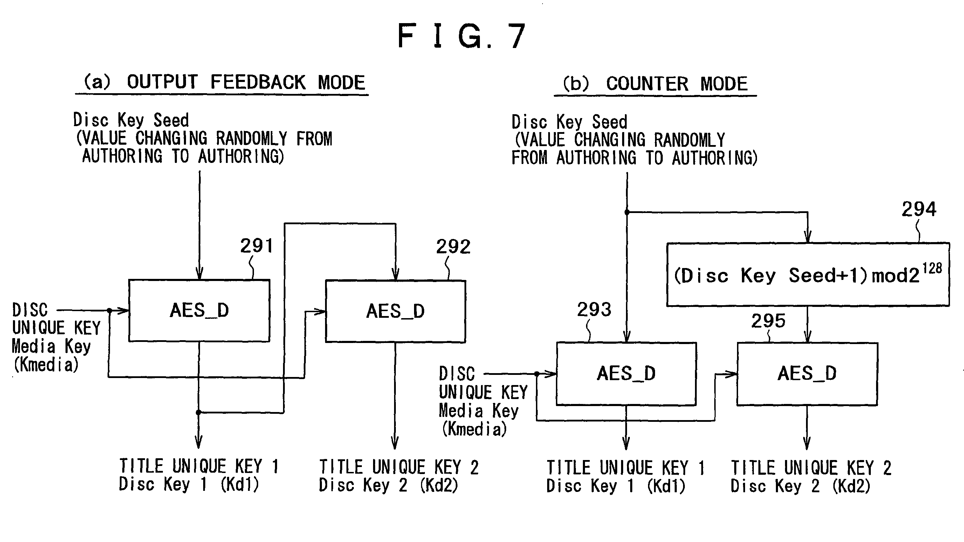

By referring to Figs. 7(a) and 7(b), the following description explains a configuration in which two title unique keys are computed from only a stored piece of information. In this typical configuration, a random value such as a random number set for each editing (authoring) process is stored on the information-recording medium 220 as a disc key seed.

In typical processing shown in Fig. 7(a), a disc key seed is subjected to an encryption process applying a disc unique key in an AES encryption processor 291 to generate a title unique key 1. Then, the title unique key 1 is subjected to an AES encryption process applying the disc unique key in an AES encryption processor 292 to generate a title unique key 2.

In typical processing shown in Fig. 7(b), a disc key seed is subjected to an encryption process applying a disc unique key in an AES encryption processor 293 to generate a title unique key 1. The title unique key 1 is also supplied to a processing unit 294 for carrying out a process such as computation of {(disc key seed + 1) mod 2¹²⁸}. The result of the process is subjected to an AES encryption process applying the disc unique key in an AES encryption processor 295 to generate a title unique key 2. In accordance with the methods shown in Figs. 7(a) and 7(b), the amount of information stored on the information-recording medium 220 can be reduced.

The description is referred back to Fig. 3 to continue the process to decode and reproduce data read out from the information-recording medium. Two recording keys (REC keys) 1 and 2 are generated at steps S104 and S105 respectively. Then, at a step S106, a process to generate a block key Kb1 is carried out.

In the process to generate a block key Kb1, a seed (seed 1) 227 is read out from the information-recording medium 220 as information required for generation of the block key Kb1. Then, an encryption process based on the seed (seed 1) 227 and the recording key K1 generated at the step S104 is carried out to generate the block key Kb1.

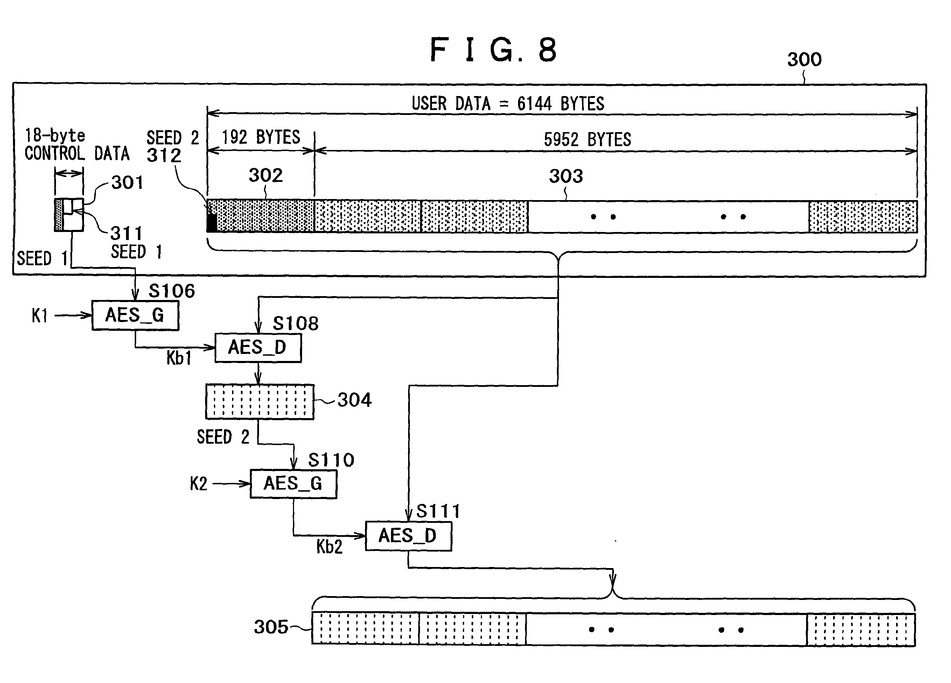

By referring to Fig. 8, the following description explains processes carried out after the process performed at the step S106 to generate the block key Kb1.

In the typical configuration shown in Fig. 8, a decryption process is carried out in processing units 300 The processing unit 300 corresponds to the processing unit explained before by referring to Fig. 1(b). The processing unit explained before by referring to Fig. 1(b) is the AU (Aligned Unit). On the basis of a flag included in control data, the information-processing apparatus 210 reproducing encrypted data recorded on the information-recording medium 220 extracts an AU (Aligned Unit) used as the encryption processing unit.

The processing unit 300 includes control data 301 having a length of 18 bytes and 6144-byte user data including an encrypted content. The user data having a size of 6144 bytes is divided into 192-byte units, which are each TS (Transport Stream) packet. The user data is explained below by dividing the user data into the first TS packet 302 at the head of the user data and the following TS-packet group 303 having a length of 5952 bytes. In this typical configuration, the seed (seed 1) 311 is included in the control data 301. On the other hand, a seed (seed 2) 312 is included in the first TS packet 302 at the head of the user data as encrypted information.

It is to be noted that the above configuration in which seeds 1 and 2 are stored on the information-recording medium as seeds is typical. There is a plurality of configurations in which the seeds can be stored on the information-recording medium as will be described later.

In Fig. 8, processing steps identical with their respective counterparts shown in Fig. 3 are denoted by the same reference numerals as the counterparts.

At the step S106 shown in Figs. 3 and 8, a seed (seed 1) 311 read out from control data stored on the information-recording medium is supplied to an AES encryption processor, which carries out an AES encryption process applying a recording key K1 generated at the preceding step S104 on the seed 311 to generate a block key Kb1. It is to be noted that, in Fig. 8, reference notation AES_G denotes a key generation process applying AES encryption processing and reference notation AES_D denotes a data decryption process applying AES encryption processing.

Next, at a step S107 shown in Fig. 3, only an encrypted data portion is extracted from user data including 32 TS packets. The encrypted data portion of the user data is separated from an unencrypted data portion at the step S107, and only the encrypted data portion is subjected to decryption processes carried out at steps S108 to S111. The unencrypted data portion skips the steps S108 to S111 and, at a step S112 (which is a selector step), the unencrypted data portion is again concatenated with a result of decrypting the encrypted data portion to form a decrypted TS packet group. The decrypted TS packet group is then supplied to typically an MPEG decoder, which carries out a decoding process on the group.

At the step S108 shown in Figs. 3 and 8, an AES decryption process applying the block key Kb1 generated at the step S106 is carried out. Only a data portion obtained as a result of an encryption process applying the block key Kb1 is subjected to the decryption process carried out at the step S108. In this typical configuration, a data portion including at least the seed (seed 2) of the first TS packet 302 at the head of the user data is the data portion obtained as a result of an encryption process applying the block key Kb1. Thus, the data portion including at least the seed (seed 2) is subjected to the decryption process applying the block key Kb1.

It is to be noted that, as will be described later, there are some patterns with regard to determination of a data portion as the data portion obtained as a result of an encryption process applying the block key Kb1.

The first TS packet 302 includes the seed (seed 2) 312 required for computing a block key Kb2 to be applied to a process to decrypt user data portions other than the first TS packet 302. In this typical configuration, the other user data portions are the TS packet group 303 following the first TS packet 302 as a group having a length of 5952 bytes. That is to say, the seed (seed 2) 312 is recorded in the first TS packet 302 as encrypted data obtained as a result of an encryption process applying the block key Kb1.

As a result of the decryption process carried out at the step S106 by applying the block key Kb1, a decoded TS packet 304 is generated. A seed (seed 2) is then extracted from the decoded TS packet 304.

At a selector step S109 shown in Fig. 3, the seed (seed 2) is extracted from the result of the decryption process by applying the block key Kb1. The extracted seed is supplied to a process carried out at a step S110 to generate a block key Kb2. Encrypted data obtained as a result of an encryption process applying the block key Kb2 are supplied to a decryption process carried out at a step S111 to generate a decrypted (unencrypted) result, which is then concatenated with the other result at a selector step 112.

To put it in detail, at the step S110 shown in Figs. 3 and 8, an AES encryption process is carried out to generate a block key Kb2 by carrying out an encryption process based on the seed (seed 2) and the recording key K2. The seed (seed 2) is the seed extracted from a decoded TS packet 304 obtained as a result of the decryption process carried out at the step S108 by applying the block key Kb1. On the other hand, the recording key K2 is the key generated at the step S105 shown in Fig. 3.

Then, at the next step S111, the encrypted data portion of the user data is decrypted by applying the block key Kb2 to generate a decrypted TS packet block 305. The encrypted data portion of the user data is the data portion 303, which is a result obtained from an encryption process applying the block key Kb2.

Finally, at the selector step S112, the decoded TS packet group 305 is concatenated with the decoded TS packet 304 to generate decoded TS packets, which are then supplied to typically an MPEG-2 decoder for generating a decoded result as eventually reproduced data.

As described above, in the configuration of the present invention, a seed (seed 2) required for generating a key (the block key Kb2) to be applied to a process of decrypting an encrypted content is encrypted by applying another key (that is, the block key Kb1) and stored in advance on a disc. Thus, the unencrypted seed (seed 2) cannot be read out without decryption from the disc. As a result, difficulties to analyze the key generated by using the seed and analyze an encryption algorithm are increased, and protection of a content can be implemented at a high level of security.

It is to be noted that there are a variety of configurations in which the two seeds are stored on the information-recording medium. A plurality of typical seed storage configurations is explained as follows.

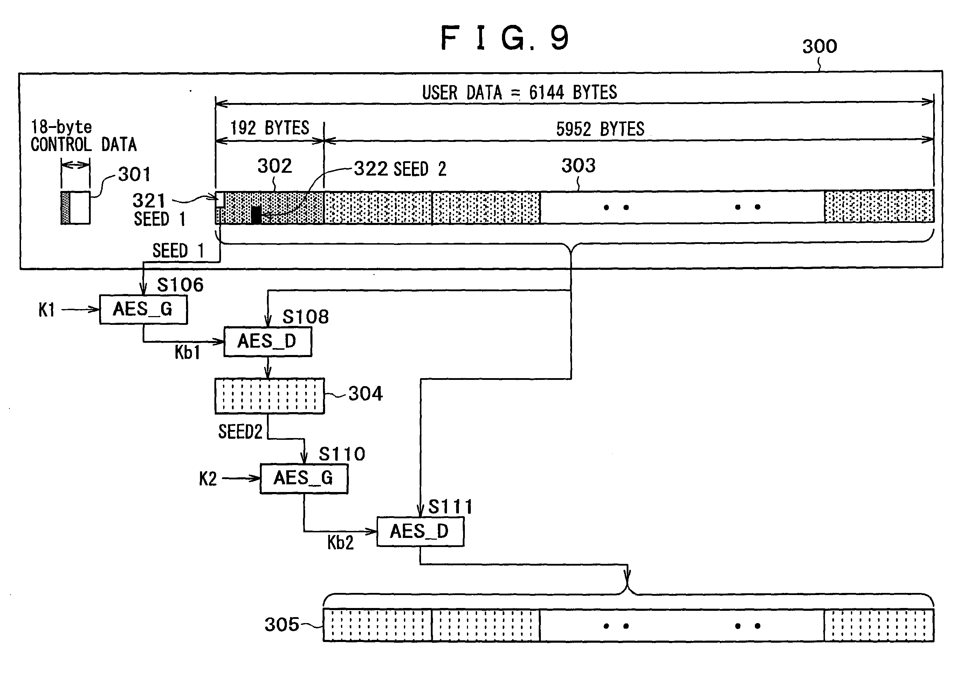

Fig. 9 is a diagram showing a typical configuration in which both the seeds (seeds 1 and 2) are stored in the first TS packet 302 of the user data. In the typical configuration explained earlier by referring to Fig. 8, the seed (seed 1) 311 is included in the control data 301 while the other seed (seed 2) 312 is included in the first TS packet 302 at the head of the user data as encrypted information. In the typical configuration shown in Fig. 9, on the other hand, both the seed (seed 1) 321 and the other seed (seed 2) 322 are stored in the first TS packet 302 at the head of the user data.

It is to be noted that, much like the typical configuration explained earlier by referring to Fig. 8, the other seed (seed 2) 322 is encrypted by using the block key Kb1 acquired by applying the seed (seed 1) 321 and included in the first TS packet 302 at the head of the user data.

In the case of the typical configuration shown in Fig. 9, a decryption process is carried out in processing units 300. The processing unit 300 is the AU (Aligned Unit) corresponding to the processing unit explained before by referring to Fig. 1(b). On the basis of a flag included in control data, the information-processing apparatus 210 reproducing encrypted data recorded on the information-recording medium 220 extracts an AU (Aligned Unit) used as the encryption processing unit.

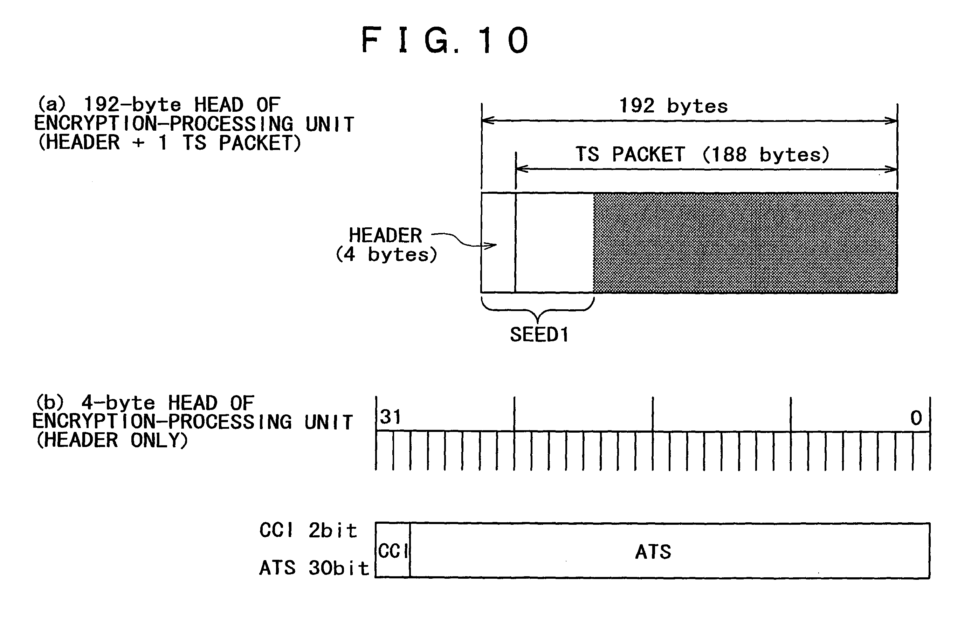

It is also possible to provide alternative welfare in which a flag included in the seed 321 stored at the head of the encryption processing unit is used for determining whether data has been encrypted in encryption processing units or has not been encrypted in encryption processing units. Figs. 10(a) and 10(b) are diagrams showing a further typical configuration in which the head of an encryption processing unit includes a seed. By using a flag recorded in a CCI portion serving as copy control information shown in Figs. 10(a) and 10(b), it is possible to determine whether or not data has been encrypted. If the data is determined to be encrypted data, the data is reproduced through a path of decryption of the data. If the data is determined to be unencrypted data, on the other hand, the data is reproduced without going through a path of decryption of the data.

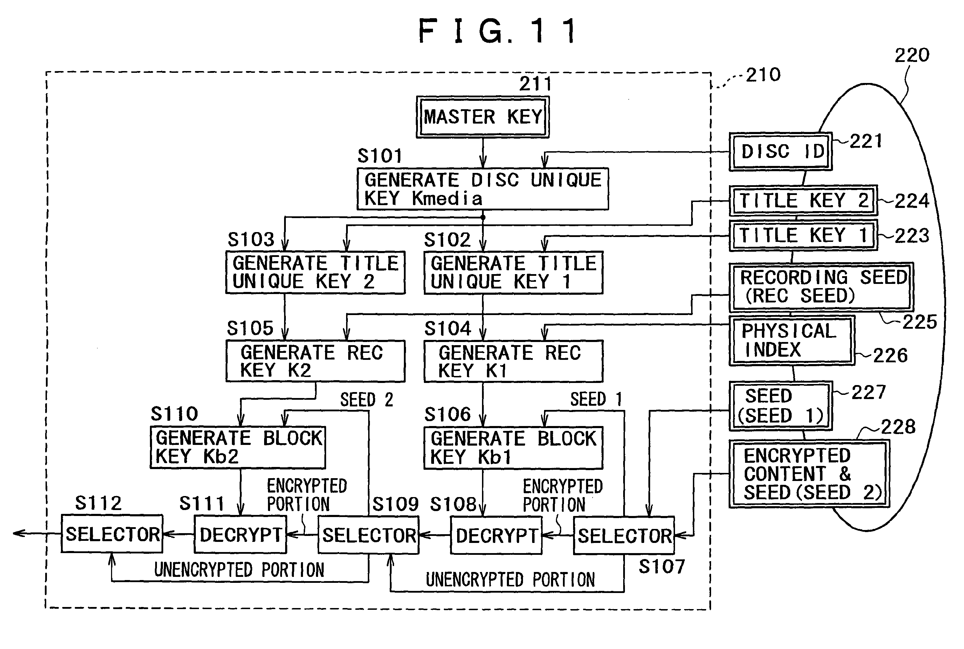

Fig. 11 is a diagram showing a processing configuration in which a flag recorded in a CCI portion is used to determine whether or not data has been encrypted and, if the data is determined to be encrypted data, the data is reproduced through a path of decryption of the data but, if the data is determined to be unencrypted data, on the other hand, the data is reproduced without going through a path of decryption of the data. The only difference between the processing configuration shown in Fig. 11 and the earlier one shown in Fig. 3 is as follows. In the case of the processing configuration shown in Fig. 11, a flag recorded in a CCI portion of the seed (seed 1) 227, which is input at the step S107, is used to determine whether or not data has been encrypted. If the data is determined to be encrypted data, the data is reproduced through a path of decryption of the data but, if the data is determined to be unencrypted data, on the other hand, the data is reproduced without going through a path of decryption of the data. The other processes of the configuration shown in Fig. 11 are the same as their respective counterparts of the configuration shown in Fig. 3.

Next, processing shown in Fig. 9 is explained. In Fig. 9, processing steps identical with their respective counterparts shown in Fig. 11 are denoted by the same reference numerals as the counterparts.

The step S106 shown in Figs. 11 and 9 is a step at which a seed (seed 1) 321 read out from the first TS packet at the head of user data recorded on the information-recording medium is supplied to an AES encryption processor, which carries out an AES encryption process applying a recording key K1 generated earlier at the step S104 shown in Fig. 11 on the seed to generate a block key Kb1.

Then, at the next step S107 shown in Fig. 11, only an encrypted data portion is extracted from user data including 32 TS packets. The encrypted data portion of the user data is separated from an unencrypted data portion at the step S107, and only the encrypted data portion is subjected to decryption processes carried out at steps S108 to S111. The unencrypted data portion skips the steps S108 to S111 and, at a step S112 (which is a selector step), the unencrypted data portion is again concatenated with a result of decrypting the encrypted data portion to form a decrypted TS packet group. The decrypted TS packet group is then supplied to typically an MPEG decoder, which carries out a decoding process on the group.

At the step S108 shown in Figs. 11 and 9, an AES decryption process applying the block key Kb1 generated at the step S106 is carried out. Only a data portion obtained as a result of an encryption process applying the block key Kb1 is subjected to the decryption process carried out at the step S108. In this typical configuration, a data portion including at least the seed (seed 2) 322 of the first TS packet 302 at the head of the user data is subjected to the decryption process.

The first TS packet 302 includes the seed (seed 2) 322 required for computing a block key Kb2 to be applied to a process to decrypt user data portions other than the first TS packet 302. In this typical configuration, the other user data portions are the TS packet group 303 following the first TS packet 302 as a group having a length of 5952 bytes. That is to say, the seed (seed 2) 322 is recorded in the first TS packet 302 as encrypted data obtained as a result of an encryption process applying the block key Kb1.

As a result of the decryption process carried out at the step S106 by applying the block key Kb1, a decoded TS packet 304 is generated. A seed (seed 2) is then extracted from the decoded TS packet 304.

At a selector step S109 shown in Fig. 3, the seed (seed 2) is extracted from the result of the decryption process by applying the block key Kb1. The extracted seed is supplied to a process carried out at a step S110 to generate a block key Kb2. Encrypted data obtained as a result of an encryption process applying the block key Kb2 are supplied to a decryption process carried out at a step S111 to generate a decrypted (unencrypted) result, which is then concatenated with the other result at a selector step 112.

To put it in detail, at the step S110 shown in Figs. 11 and 9, an AES encryption process is carried out to generate a block key Kb2 by carrying out an encryption process based on the seed (seed 2) and the recording key K2. The seed (seed 2) is the seed extracted from a decoded TS packet 304 obtained as a result of the decryption process carried out at the step S108 by applying the block key Kb1. On the other hand, the recording key K2 is the key generated at the step S105 shown in Fig. 11.

Then, at the next step S111, the encrypted data portion of the user data is decrypted by applying the block key Kb2 to generate a decrypted TS packet block 305. The encrypted data portion of the user data is the data portion 303, which is a result obtained from an encryption process applying the block key Kb2.

Finally, at the selector step S112, the decoded TS packet group 305 is concatenated with the decoded TS packet 304 to generate decoded TS packets, which are then supplied to typically an MPEG-2 decoder for generating a decoded result as eventually reproduced data.

As described above, in this typical configuration, a seed (seed 1) and another seed (seed 2) are both stored in the first TS packet of user data. The other seed (seed 2) required for generating a key (the block key Kb2) is encrypted in advance on the basis of a block key Kb1. The block key Kb1 is generated on the basis of the seed (seed 1) and a recording key K1.

Thus, also in this typical configuration, the unencrypted seed (seed 2) cannot be read out without decryption from the disc. As a result, difficulties to analyze the key generated by using the seed and analyze an encryption algorithm are increased, and protection of a content can be implemented at a high level of security.

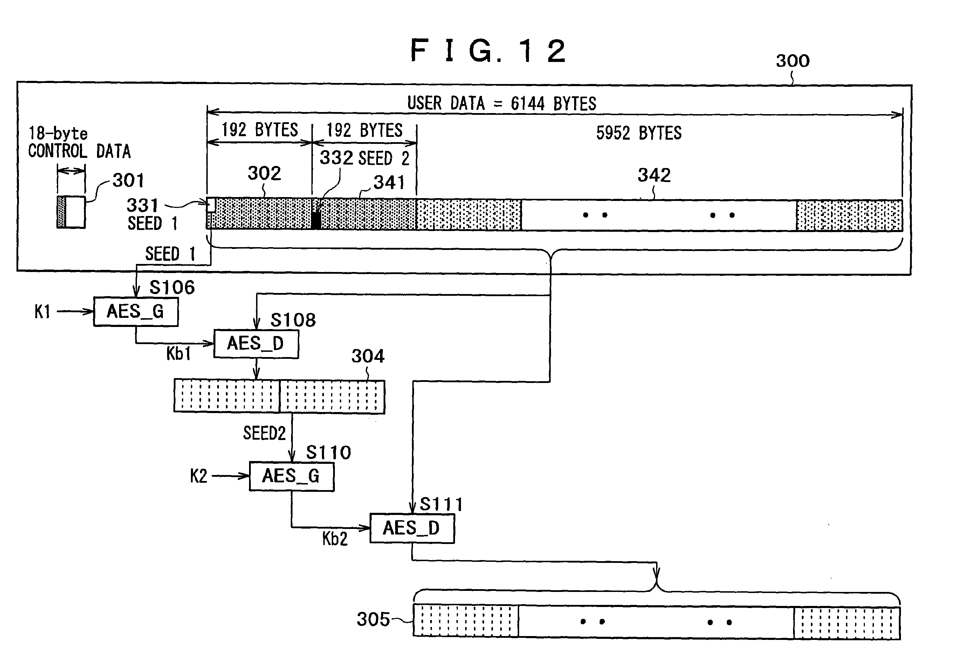

Fig. 12 is a diagram showing a typical configuration in which the seed (seed 1) 331 is stored in the first TS packet 302 of the user data but the other seed (seed 2) 332 is stored in a TS packet 341 immediately following the first TS packet 302 in the user data.

It is to be noted that, much like the typical configurations explained earlier by referring to Figs. 8 and 9, the other seed (seed 2) 332 is encrypted by using the block key Kb1 acquired by applying the seed (seed 1) 331 but included in the second TS packet 341 at the head of the user data.

In the case of the typical configuration shown in Fig. 12, a decryption process is carried out in processing units 300. The processing unit 300 is the AU (Aligned Unit) corresponding to the processing unit explained before by referring to Fig. 1(b). On the basis of a flag included in control data, the information-processing apparatus 210 reproducing encrypted data recorded on the information-recording medium 220 extracts an AU (Aligned Unit) used as the encryption processing unit.

It is also possible to provide an alternative configuration in which a flag included in the seed 321 stored at the head of an encryption processing unit is used for determining whether data has been encrypted in encryption processing units or has not been encrypted in encryption processing units. Figs. 10(a) and 10(b) are diagrams showing a further typical configuration in which the head of an encryption processing unit includes a seed. By using a flag recorded in a CCI portion shown in Figs. 10(a) and 10(b), it is possible to determine whether or not data has been encrypted. If the data is determined to be encrypted data, the data is reproduced through a path of decryption of the data. If the data is determined to be unencrypted data, on the other hand, the data is reproduced without going through a path of decryption of the data.

Next, processing shown in Fig. 12 is explained. In Fig. 12, processing steps identical with their respective counterparts shown in Fig. 3 are denoted by the same reference numerals as the counterparts.

The step S106 shown in Figs. 11 and 12 is a step at which a seed (seed 1) 331 read out from the first TS packet at the user data recorded on the information-recording medium is supplied to an AES encryption processor, which carries out an AES encryption process applying a recording key K1 generated earlier at the step S104 shown in Fig. 11 on the seed to generate a block key Kb1.

Then, at the next step S107 shown in Fig. 3, only an encrypted data portion is extracted from user data including 32 TS packets. The encrypted data portion of the user data is separated from an unencrypted data portion at the step S107, and only the encrypted data portion is subjected to decryption processes carried out at steps S108 to S111. The unencrypted data portion skips the steps S108 to S111 and, at a step S112 (which is a selector step), the unencrypted data portion is again concatenated with a result of decrypting the encrypted data portion to form a decrypted TS packet group. The decrypted TS packet group is then supplied to typically an MPEG decoder, which carries out a decoding process on the group.

At the step S108 shown in Figs. 11 and 12, an AES decryption process applying the block key Kb1 generated at the step S106 is carried out. Only a data portion obtained as a result of an encryption process applying the block key Kb1 is subjected to this decryption process. In this typical configuration, an encrypted data portion of the data area excluding the seed (seed 1) 321 of the first TS packet of the user data and a data area including at least the other seed (seed 2) 332 of the second TS packet of the user data are subjected to the decryption process. As will be described later, there are some patterns with regard to determination of a data area as the data portion obtained as a result of an encryption process applying the block key Kb1.

In this typical configuration, an encrypted data area of the second TS packet 341 includes the seed (seed 2) 332 required for computing a block key Kb2 to be applied to a process to decrypt other user data portions. The other user data portions are the TS packet group 342 following the second TS packet 341. That is to say, the seed (seed 2) 332 is recorded in the second TS packet 341 as encrypted data obtained as a result of an encryption process applying the block key Kb1.

As a result of the decryption process carried out at the step S106 by applying the block key Kb1, a decoded TS packet 304 is generated. A seed (seed 2) is then extracted from the decoded TS packet 304.

At a selector step S109 shown in Fig. 11, the seed (seed 2) is extracted from the result of the decryption process by applying the block key Kb1. The extracted seed is supplied to a process carried out at a step S110 to generate a block key Kb2. Encrypted data obtained as a result of an encryption process applying the block key Kb2 are supplied to a decryption process carried out at a step S111 to generate a decrypted (unencrypted) result, which is then concatenated with the other result at a selector step 112.

To put it in detail, at the step S110 shown in Figs. 11 and 12, an AES encryption process is carried out to generate a block key Kb2 by carrying out an encryption process based on the seed (seed 2) and the recording key K2. The seed (seed 2) is the seed extracted from a decoded TS packet 304 obtained as a result of the decryption process carried out at the step S108 by applying the block key Kb1. On the other hand, the recording key K2 is the key generated at the step S105 shown in Fig. 11.

Then, at the next step S111, the encrypted data portion of the user data is decrypted by applying the block key Kb2 to generate a decrypted TS packet block 305. The encrypted data portion of the user data is the data portion 342, which is a result obtained from an encryption process applying the block key Kb2.

Finally, at the selector step S112, the decoded TS packet group 305 is concatenated with the decoded TS packet 304 to generate decoded TS packets, which are then supplied to typically an MPEG-2 decoder for generating a decoded result as eventually reproduced data.

As described above, this typical configuration, stores in the first TS packets of user data of the seed (seed 1). The other seed (seed 2) is stored in the second TS packets of user data. The seed (seed 2) required for generating a key (the block key Kb2) is encrypted in advance on the basis of a block key Kb1. The block key Kb1 is generated on the basis of the seed (seed 1) and a recording key K1.

Thus, also in this typical configuration, the unencrypted seed (seed 2) cannot be read out without decryption from the disc. As a result, difficulties to analyze the key generated by using the seed and analyze an encryption algorithm are increased, and protection of a content can be implemented at a high level of security.

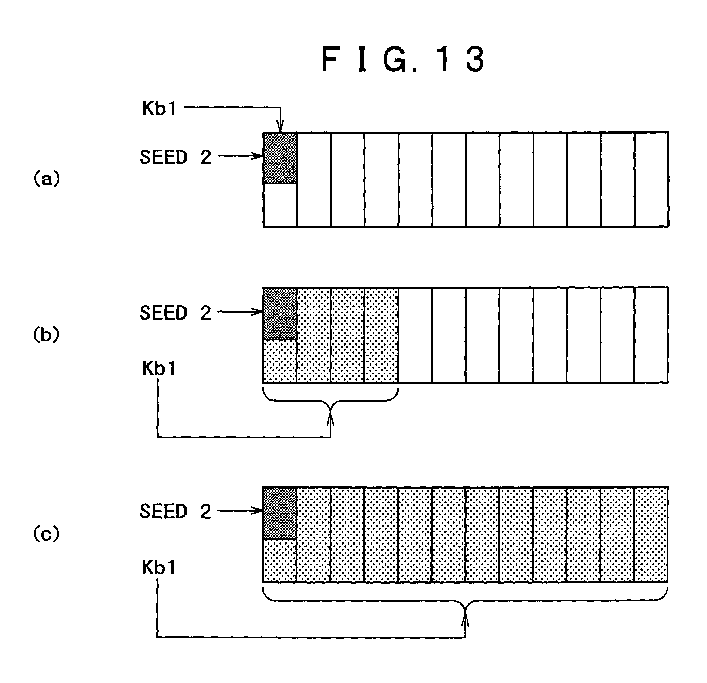

By referring to Figs. 13(a) to 15(i), the following description explains an area encrypted by using a block key Kb1, which is generated on the basis of a seed (seed 1) and a recording key K. Figs. 13(a), 13(b), and 13(c) are diagrams showing a typical configuration in which a seed (seed 1) is stored in a control block, and another seed (seed 2) is included in one of TS packets composing user data. In the typical configurations explained earlier by referring to Figs. 8, 9, and 12, the seed (seed 2) is included in the first or second TS packet of user data. However, the seed (seed 2) can also be stored in any arbitrary user-data TS packet other than the first and second TS packets.

Figs. 13(a) to 13(c) are diagrams each showing the configuration of an area encrypted by using a block key Kb1, which is generated on the basis of a seed (seed 1) and a recording key K1, for a seed (seed 2) stored in any arbitrary TS packet of user data. In particular, Fig. 13(a) shows a typical configuration in which only the seed (seed 2) is encrypted by using the block key Kb1. Areas other than the seed (seed 2) are each an unencrypted area or a data area encrypted by using a block key Kb2, which is generated on the basis of the seed (seed 2) and a recording key K2.

Fig. 13(b) shows a typical configuration in which a partial area included in a TS packet as an area including the seed (seed 2) is encrypted by using the block key Kb1.

In the authoring studio 282 shown in Fig. 6, a seed (seed 2) and an edit ID are stored in a TS packet. In the disc manufacturer 283 also shown in Fig. 6, the seed (seed 2) is encrypted by using a recording key K1, which can be generated on the basis of a seed (seed 1), before being stored on a disc.

Fig. 13(c) shows a typical configuration in which the entire area of a TS packet including the seed (seed 2) is encrypted by using the block key Kb1.

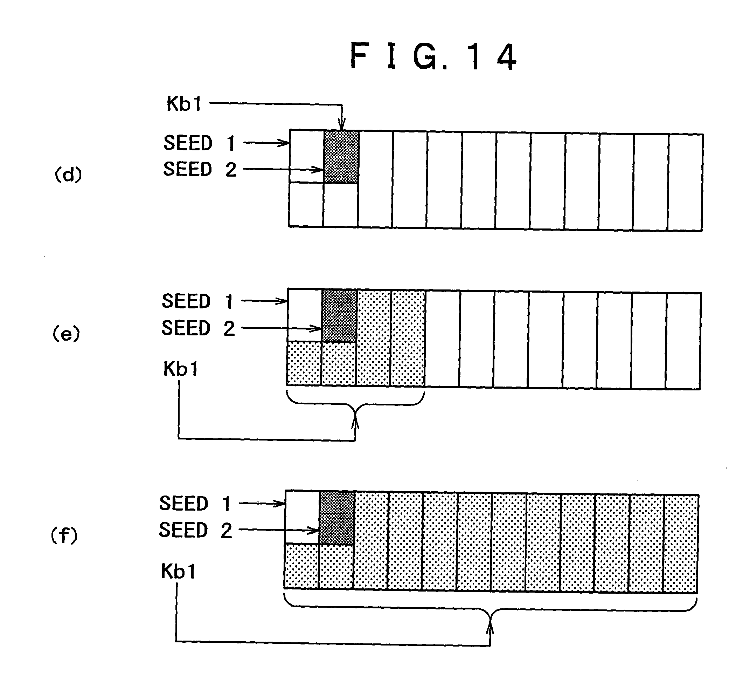

In each of typical configurations shown in Figs. 14(d), 14(e), and 14(f), a seed (seed 1) and a seed (seed 2) are stored in the same TS packet. The seed (seed 1) is stored as unencrypted information. On the other hand, the seed (seed 2) is stored in the same TS packet as the seed (seed 1) as information encrypted by using a block key Kb1, which is generated on the basis of the seed (seed 1) and a recording key K1.

In particular, Fig. 14(d) shows a typical configuration in which only the seed (seed 2) is encrypted by using the block key Kb1. Areas other than the seed (seed 2) are each an unencrypted area or a data area encrypted by using a block key Kb2, which is generated on the basis of the seed (seed 2) and a recording key K2.

Fig. 14(e) shows a typical configuration in which a partial area included in a TS packet as an area including the seed (seed 2) is encrypted by using the block key Kb1. Fig. 14(f) shows a typical configuration in which the entire area of a TS packet including the seed (seed 2) is encrypted by using the block key Kb1.

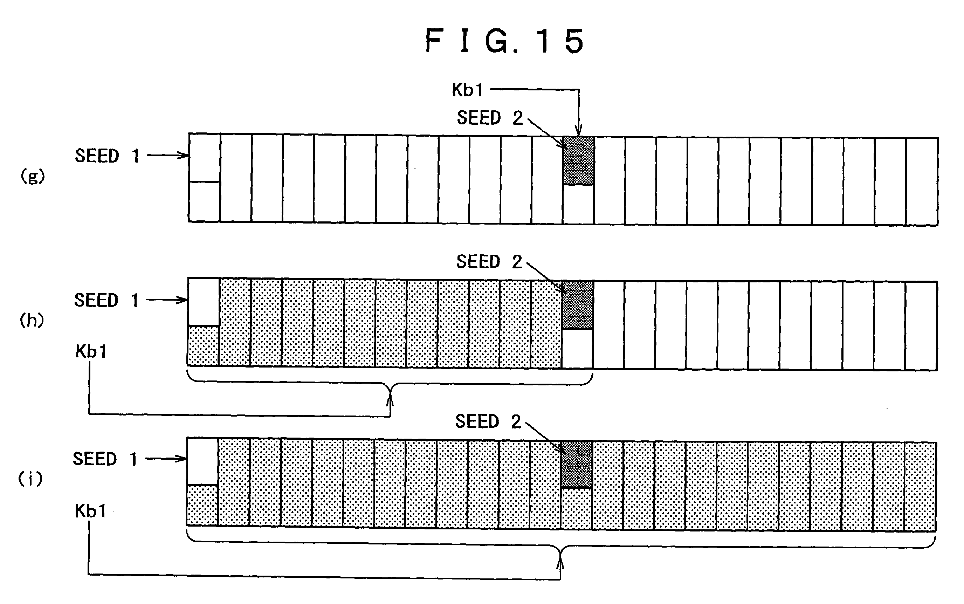

In each of typical configurations shown in Figs. 15(g), 15(h), and 15(i), a seed (seed 1) and a seed (seed 2) are stored in different TS packets. The seed (seed 1) is stored as unencrypted information. On the other hand, the seed (seed 2) is stored in a TS packet different from that for the seed (seed 1) as information encrypted by using a block key Kb1, which is generated on the basis of the seed (seed 1) and a recording key K1.

In particular, Fig. 15(g) shows a typical configuration in which only the seed (seed 2) is encrypted by using the block key Kb1. Areas other than the seed (seed 2) are each an unencrypted area or a data area encrypted by using a block key Kb2, which is generated on the basis of the seed (seed 2) and a recording key K2.

Fig. 15(h) shows a typical configuration in which a partial area included in a TS packet as an area including the seed (seed 2) is encrypted by using the block key Kb1. Fig. 15(i) shows a typical configuration in which the entire area of a TS packet including the seed (seed 2) is encrypted by using the block key Kb1.

As is obvious from the descriptions with reference to Figs. 13(a) to 15(i), it is possible to set a variety of configurations for storing the seeds (seeds 1 and 2) and a variety of configurations for determining an encrypted area. In either configuration, however, the seed (seed 2) is stored as information encrypted by using a block key Kb1, which is generated on the basis of the seed (seed 1). Thus, the unencrypted seed (seed 2) cannot be read out without decryption from the information-recording medium. As a result, difficulties to analyze the seed (seed 2), analyze the block key Kb2 generated by application of the seed (seed 2), and analyze an algorithm for encrypting user data to produce encrypted user data are increased.

### [Configuration for Inputting and Outputting Data through Interfaces with the Information-Recording Medium Drive]

The following description explains a variety of interfaces for connecting an information-processing apparatus such as a PC to an information-recording medium drive for mounting an information-recording medium. The description also explains typical processing to transfer data between the information-processing apparatus and the information-recording medium drive through the interfaces. Examples of the interface are the SCSI, the IEEEE1394, and the USB whereas examples of the information-recording medium include the DVD and the CD.

For example, Fig. 15 is a diagram showing a configuration in which an information-processing apparatus 410 such as a PC is connected to an information-recording medium drive 420 for mounting an information-recording medium 430 such a DVD or a CD through an interface 411 on the information-processing apparatus 410 and an interface 421 on the information-recording medium drive 420. In this typical configuration, the information-recording medium drive 420 makes an access to the information-recording medium 430, transferring accessed data to the information-processing apparatus 410 such as a PC through the interfaces 421 and 411 and, in the information-processing apparatus 410, the data is reproduced.

As shown in the figure, if the data transferred through the interfaces 421 and 411 includes a seed (seed 2) in an unencrypted state, it is quite within the bounds of possibility that the seed (seed 2) is leaked out from the transferred data.

In order to solve this problem, in a processing configuration provided by the present invention, the information-processing apparatus 410 and the information-recording medium drive 420 carry out a mutual authentication process when data is transferred between the information-processing apparatus 410 and the information-recording medium drive 420 through the interfaces. Before the data is transferred, the data is encrypted by using a session key obtained as a result of the mutual authentication process. The processing configuration is explained in detail as follows.

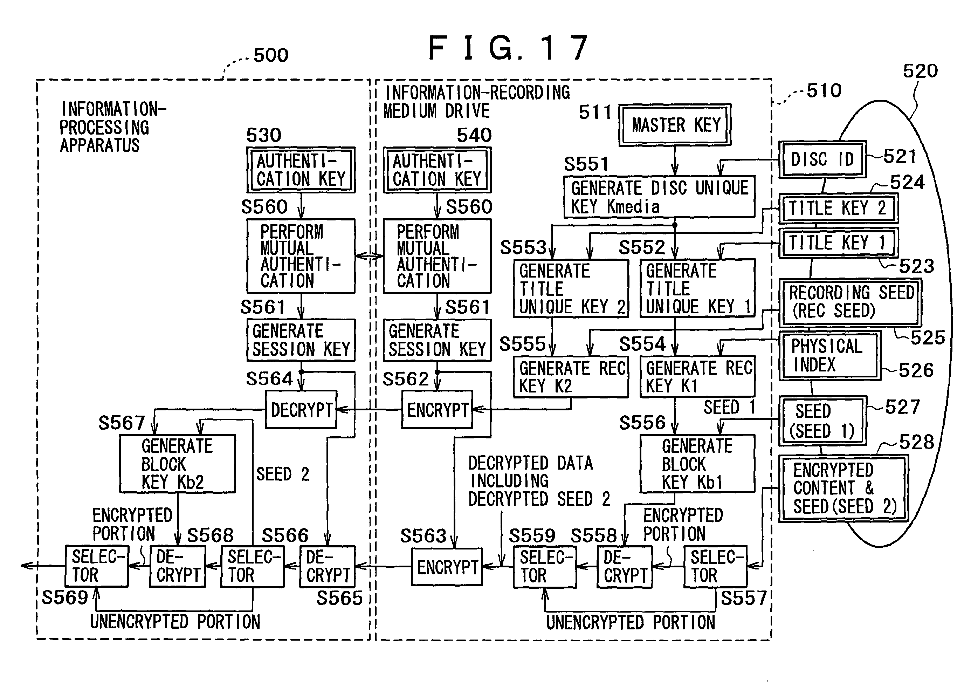

Fig. 17 is an explanatory diagram showing processing carried out by an information-recording medium drive 510 to read out data of an encrypted content from an information-recording medium 520 and processing carried out by an information-processing apparatus 500 such as a PC to reproduce the data. It is to be noted that the information-processing apparatus 500 and the information-recording medium drive 510 each have a configuration all but identical with that explained earlier by referring to Fig. 2 except that the recording medium 195 and the drive 190, which are shown in Fig. 2, are not indispensably required in the information-processing apparatus 500 such as a PC but needed only in the information-recording medium drive 510. On the other hand, in the configuration shown in Fig. 17, the MPEG codec 130 and the TS-processing means 198 are not indispensably required in the information-recording medium drive 510 but needed only in the information-processing apparatus 500 such as a PC.

By referring to Fig. 17, the following description explains processing carried out by the information-recording medium drive 510 to read out data from the information-recording medium 520 and transfer the data to the information-processing apparatus 500.

First of all, the information-recording medium drive 510 reads out a master key 511 stored in its own memory 180 shown in Fig. 2. It is to be noted that, the master key 511 may be stored in the information-processing apparatus 500. In this case, the information-recording medium drive 510 requests the information-processing apparatus 500 to transmit the master key 511 to the information-recording medium drive 510. The master key 511 is a secret key stored in an information-processing apparatus granted a license. The information-processing apparatus granted a license may be an information-recording medium drive. The master key 511 is a common key stored in a plurality of information-processing apparatus as a key common to the information-processing apparatus.

Then, the information-recording medium drive 510 reads out a disc ID 521 from the information-recording medium 520. The disc ID 521 is information peculiar to the information-recording medium 520 and typically stored in a general-data storage area or a lead-in area on the information-recording medium 520.

Subsequently, at a step S551, the information-recording medium drive 510 generates a disc unique key by using the master key 511 and the disc ID 521. The typical concrete methods each applicable to generation of a disc unique key have been explained earlier by referring to Figs. 4 (a) and 4(b).

Then, two title keys peculiar to a recorded content are read out from the information-recording medium 520. The two title keys are title keys 1 and 2 denoted by reference numerals 523 and 524 respectively. The title keys are stored in a data management file existing on the information-recording medium 520 as a file for storing information indicating which title is assigned to which data. If only one pair of title keys exists for one disc, that is, if the title keys can be determined uniquely for the disc ID 521, the title keys can be stored in the same way as the disc ID 521. To put it concretely, the pair of title keys can be stored in a general-data storage area or a lead-in area on the information-recording medium 520.

Then, at steps S552 and S553, two title unique keys 1 and 2 are generated respectively from the disc unique key and the title keys 1 and 2 respectively.

Subsequently, at steps S554 and S555, the information-recording medium drive 510 generates two recording keys (REC keys) K1 and K2 respectively on the basis of the two title unique keys 1 and 2 generated at the steps S552 and S553 respectively and on the basis of a recording seed (REC SEED) 525 and a physical index 526, which are read out from the information-recording medium 520.

Typical processing carried out at the steps S552 to S555 to generate the two recording keys (REC keys) K1 and K2 has been explained earlier by referring to Figs. 5(a) and 5(b). That is to say, the processing to generate the two recording keys (REC keys) K1 and K2 is an AES (Advanced Encryption Standard) encryption process based on the two title unique keys 1 and 2 as well as the recording seed (REC SEED) 525 and the physical index 526, which are read out from the information-recording medium 520.

It is to be noted that, as described earlier by referring to Figs. 7(a) and 7(b), instead of storing the recording seed (REC SEED) 525 and the physical index 526 in the information-recording medium 520, it is also possible to adopt a method whereby a random value such as a random number set for each editing (authoring) process is stored on the information-recording medium 520 as a disc key seed, and an AES encryption process applying a disc unique key is carried out on the disc key seed to generate title unique keys 1 and 2.

By adopting either of the methods described above, the two recording keys (REC keys) 1 and 2 are generated at the steps S554 and S555 respectively. Then, at a step S556, a process to generate a block key Kb1 is carried out.

In the process to generate a block key Kb1, a seed (seed 1) 527 is read out from the information-recording medium 520 as information required for generation of the block key Kb1. Then, an encryption process based on the seed (seed 1) 527 and the recording key K1 generated at the step S554 is carried out to generate the block key Kb1.

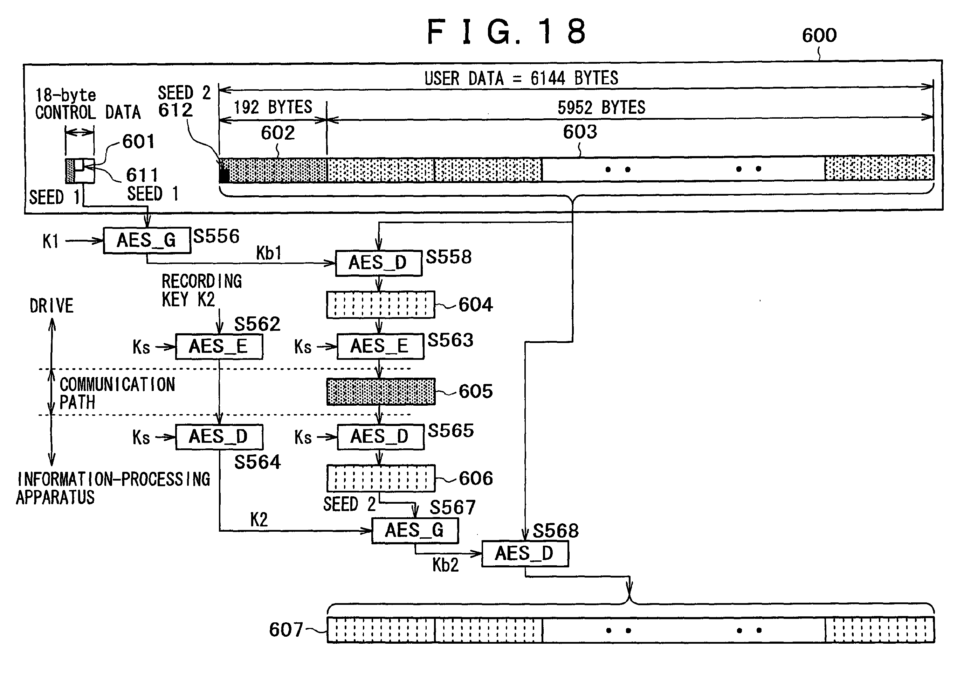

By referring to Fig. 18, the following description explains processes carried out after the process performed at the step S556 to generate the block key Kb1.

Much like the processing explained earlier by referring to Figs. 8 to 12, in the typical configuration shown in Fig. 18, a decryption process is carried out in processing units 600. The processing unit 600 corresponds to the processing unit explained before by referring to Fig. 1(b). The processing unit explained before by referring to Fig. 1(b) is the AU (Aligned Unit). On the basis of a flag included in control data, the information-recording medium drive 510 reproducing encrypted data recorded on the information-recording medium 520 extracts an AU (Aligned Unit) used as the encryption processing unit.

The processing unit 600 includes control data 601 having a length of 18 bytes and 6144-byte user data including an encrypted content. The user data having a size of 6144 bytes is divided into 192-byte units, which are each TS (Transport Stream) packet. The user data is explained below by dividing the user data into the first TS packet 602 at the head of the user data and the following TS-packet group 603 having a length of 5952 bytes. In this typical configuration, the seed (seed 1) 611 is included in the control data 601. On the other hand, a seed (seed 2) 612 is included in the first TS packet 602 at the head of the user data as encrypted information.

It is to be noted that the above configuration in which seeds 1 and 2 are stored on the information-recording medium as seeds is typical. There is a plurality of configurations in which the seeds can be stored on the information-recording medium as will be described later.

In Fig. 18, processing steps identical with their respective counterparts shown in Fig. 17 are denoted by the same reference numerals as the counterparts.

At the step S556 shown in Figs. 17 and 18, a seed (seed 1) 611 read out from control data stored on the information-recording medium is supplied to an AES encryption processor, which carries out an AES encryption process applying a recording key K1 generated at the preceding step S554 on the seed 611 to generate a block key Kb1.

Next, at a step S557 shown in Fig. 17, only a data portion encrypted by using a block key Kb1 is extracted from user data including 32 TS packets. The encrypted data portion of the user data is separated from an unencrypted data portion at the step S557 and only the encrypted data portion encrypted by using a block key Kb1 is subjected to a decryption process carried out at a step S558. The unencrypted data portion skips the step S558 and, at a step S559 (which is a selector step), the unencrypted data portion is again concatenated with a result of decrypting the encrypted data portion to form a decrypted TS packet group. The decrypted TS packet group is then encrypted by using a session key at a step S563.

At the step S558 shown in Figs. 17 and 18, an AES decryption process applying the block key Kb1 generated at the step S556 is carried out. Only a data portion obtained as a result of an encryption process applying the block key Kb1 is subjected to the decryption process carried out at the step S558. In this typical configuration, a data portion including at least the seed (seed 2) of the first TS packet 602 at the head of the user data is the data portion obtained as a result of an encryption process applying the block key Kb1. Thus, the data portion including at least the seed (seed 2) is subjected to the decryption process applying the block key Kb1.

It is to be noted that there are some patterns with regard to determination of a data portion as the data portion obtained as a result of an encryption process applying the block key Kb1. These patterns have been described earlier by referring to Figs. 13 to 15.

The first TS packet 602 includes the seed (seed 2) 612 required for computing a block key Kb2 to be applied to a process to decrypt user data portions other than the first TS packet 602. In this typical configuration, the other user data portions are the TS packet group 603 following the first TS packet 602 as a group having a length of 5952 bytes. That is to say, the seed (seed 2) 612 is recorded in the first TS packet 602 as encrypted data obtained as a result of an encryption process applying the block key Kb1.

As a result of the decryption process carried out at the step S556 by applying the block key Kb1, a decoded TS packet 604 is generated. A seed (seed 2) is included in the decoded TS packet 604.

At a selector step S559 shown in Fig. 17, the decoded TS packet 604 including the seed (seed 2) is concatenated with the other data to generate a concatenation result to be output to an encryption step S563. The decoded TS packet 604 including the seed (seed 2) is a result obtained from the decryption process applying the block key Kb1 as described above.

An encryption process carried out at the step S563 is an encryption process based on a common session key shared by the information-recording medium drive 510 and the information-processing apparatus 500. The session key is obtained as a result of a mutual authentication process carried out by the information-recording medium drive 510 and the information-processing apparatus 500. The mutual authentication process is carried out on the basis of authentication keys Km 530 and 540 shared by the information-recording medium drive 510 and the information-processing apparatus 500.

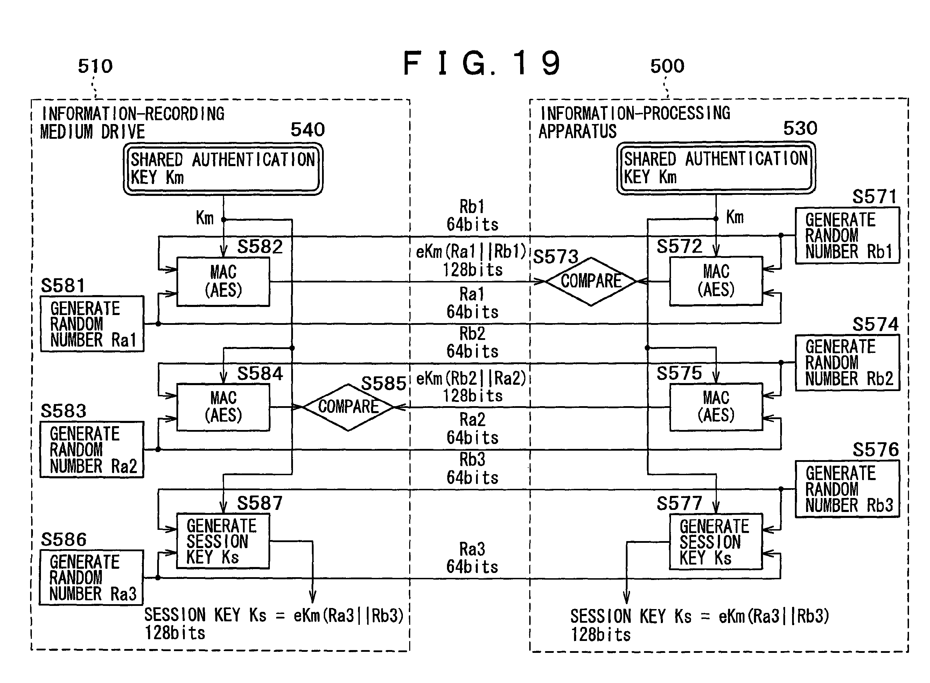

A sequence of mutual authentication operations is described by referring to Fig. 19 as follows. Fig. 19 is a diagram showing the sequence of authentication operations and operations to share a session key. These authentication operations and the operations to share a session key are a typical processing based on a commonkey process method. However, the sequence of authentication operations and operations to share a session key do not have to be this typical processing. That is to say, other process methods can also be adopted.

The information-recording medium drive 510 and the information-processing apparatus 500 have the authentication keys Km 540 and 530 respectively. First of all, at a step S571, the information-processing apparatus 500 generates a random number Rb1 having a length of 64 bits and transmits the random number Rb1 to the information-recording medium drive 510. At a step S581, the information-recording medium drive 510 generates a random number Ra1. Then, at a step S682, an AES encryption process is carried out on the basis of joint data [Ra1 | | Rb1] to generate a MAC (Message Authentication Code). The joint data [Ra1 | | Rb1] is data obtained as a result of concatenation of the random number Ra1 and the random number Rb1. Let the MAC value be referred to as eKm (Ra1 | | Rb1). It is to be noted that, in general, notation eKa (B) denotes a result of encryption of data B by using a key Ka, and notation A | | B denotes a concatenation of data A and data B. The information-recording medium drive 510 transmits the generated MAC value eKm (Ra1 | | Rb1) and the generated random number Ra1 to the information-processing apparatus 500.

At a step S572, the information-processing apparatus 500 computes a MAC value eKm (Ra1 | | Rb1) on the basis of the random number Ra1 received from the information-recording medium drive 510 and the random number Rb1 generated at the step S571. Then, at a step S573, the computed MAC value is compared with the MAC value received from the information-recording medium drive 510. If they match each other, the information-processing apparatus 500 authenticates the information-recording medium drive 510 as a valid device having a correct authentication key. On the other hand, MAC values not matching each other indicate an authentication error. In this case, no subsequent processing is carried out.

Furthermore, at a step S574, the information-processing apparatus 500 generates a random number Rb2 and transmits the random number Rb2 to the information-recording medium drive 510. At a step S583, the information-recording medium drive 510 generates a random number Ra2 and transmits the random number Ra2 to the information-processing apparatus 500.

Then, at a step S575, the information-processing apparatus 500 generates a MAC value eKm (Ra2 | | Rb2) on the basis of the random number Ra2 and the random number Rb2 and transmits the MAC value eKm (Ra2 | | Rb2) to the information-recording medium drive 510.

At a step S584, the information-recording medium drive 510 computes a MAC value eKm (Ra2 | | Rb2) on the basis of the random number Rb2 received from the information-processing apparatus 500 and the random number Ra2 generated at the step S583. Then, at a step S585, the computed MAC value is compared with the MAC value received from the information-processing apparatus 500. If they match each other, the information-recording medium drive 510 authenticates the information-processing apparatus 500 as a valid device having a correct authentication key. On the other hand, MAC values not matching each other indicate an authentication error. In this case, no subsequent processing is carried out.

Furthermore, at a step S576, the information-processing apparatus 500 generates a random number Ra3 and transmits the random number Ra3 to the information-recording medium drive 510.

At a step S586, the information-recording medium drive 510 generates a random number Ra3. Then, at a step S587, an AES encryption process is carried out on the basis of data obtained as a result of concatenation of the random number Ra3 and the random number Rb3 received from the information-processing apparatus 500 by applying the shared key Km to generate a session key Ks = eKm (Ra3 | | Rb3).

At a step S577, the information-processing apparatus 500 carries out an AES encryption process on the basis of data obtained as a result of concatenation of the generated random number Rb3 and the random number Ra3 received from the information-recording medium drive 510 by applying the shared key Km to generate a session key Ks = eKm (Ra3 | | Rb3).

By carrying out the processes described above, the information-processing apparatus 500 and the information-recording medium drive 510 are capable of mutually authenticating the partner as a valid device and sharing the session key Ks = eKm (Ra3 | | Rb3). The processes carried out at the steps S560 and S561 shown in Fig. 17 correspond to the processing explained earlier by referring to Fig. 19.

As the session key Ks is shared by the information-processing apparatus 500 and the information-recording medium drive 510, the information-recording medium drive 510 carries out encryption processes of the steps S562 and S563 shown in Fig. 17.

The encryption process of the step S562 is an AES encryption process carried out on the recording key K2 by using the session key Ks to generate an encrypted recording key eKs (K2). As described earlier, the recording key K2 is a key generated at the step S555. On the other hand, the encryption process of the step S563 is an encryption process carried out on the decrypted TS packet 604 by using the session key Ks. As described before, the decrypted TS packet 604 is a result of the decryption process carried out at the step S558 by using the block key Kb1. It is to be noted that, in the encryption process of the step S563, the object of encryption can be the entire TS packet 604, a portion of the TS packet 604, the seed (seed 2) only, or another. In addition, the type of the processing can be determined in accordance with a storage pattern of information included in the TS packet as confidential information, that is, in accordance with a range encrypted by using the block key Kb1. These storage patterns have been described earlier by referring to Figs. 13 to 15.

At the step S562, data is generated as a result of a process to encrypt the recording key K2 by using the session key Ks. At the step S563, secret information including the seed (seed 2) is encrypted by using the session key Ks to generate an encrypted TS packet 605 shown in Fig. 18. These pieces of encrypted data are transferred from the information-recording medium drive 510 to the information-processing apparatus 500. That is to say, the pieces of data transmitted through a transmission line are each a result of encryption using the session key Ks.

At steps S564 and S565, the information-processing apparatus 500 decrypts these pieces of encrypted data received from the information-recording medium drive 510. To be more specific, at the step S564, the information-processing apparatus 500 decrypts the encrypted recording key eKs (K2), by applying the session key Ks in order to acquire the recording key K2. At the step S565, on the other hand, the information-processing apparatus 500 decrypts secret encrypted information including the seed (seed 2) by applying the session key Ks in order to acquire decrypted information including the seed (seed 2). A TS packet 606 shown in Fig. 18 includes the decrypted seed (seed 2).

A step S566 is a selector step to split the output of the step S565 into the decrypted seed (seed 2), data to be decrypted by using the block key Kb2, and unencrypted data. At a step S567 shown in Figs. 17 and 18, an AES encryption process based on the seed (seed 2) and the recording key K2 is carried out to generate a block key Kb2. The seed (seed 2) is a result of the decryption process carried out at the step S565 by applying the session key Ks. On the other hand, the recording key K2 is the key generated at the step S564.

Then, at a step S568, an encrypted portion of the user data is decrypted by applying the block key Kb2 to generate a decoded TS packet group 607. The encrypted portion of the user data is a portion encrypted by using the block key Kb2.

At a selector step S569, the decoded TS packet group 607 is concatenated with the decoded TS packet 606, and the result of the concatenation is supplied to typically an MPEG-2 decoder, which then decodes the result of the concatenation to generate a final reproduced data.

As described above, in this typical configuration where it is necessary to transfer a seed (seed 2) required for generating a key (a block key Kb2) to be applied to a process to decrypt an encrypted content as part of processing to reproduce data stored on an information-recording medium from a device to another, not only is the seed (seed 2) for generating the block key Kb2 encrypted before being transferred between the devices, but a recording key K2 is also encrypted before being transferred between the devices. Thus, even if data leaks from a transmission line between the devices, it will be difficult to acquire the seed (seed 2) and the recording key K2. As a result, difficulties to analyze a key generated by using the seed and analyze an encryption algorithm are increased so that protection of contents at a high level of security can be implemented. These features can be further strengthened through enhancement of confidentiality by implementing methods including the method of acquiring a recording key K1 to the method of computing a block key Kb1, the method of generating a session key Ks, and the method of encrypting the session key Ks in the information-recording medium drive 500 as processing carried out in one LSI package.

It is to be noted that, much like the embodiment described earlier, there is a variety of configurations of the way in which the two seeds are stored on the information-recording medium. A plurality of typical configurations is described as follows.

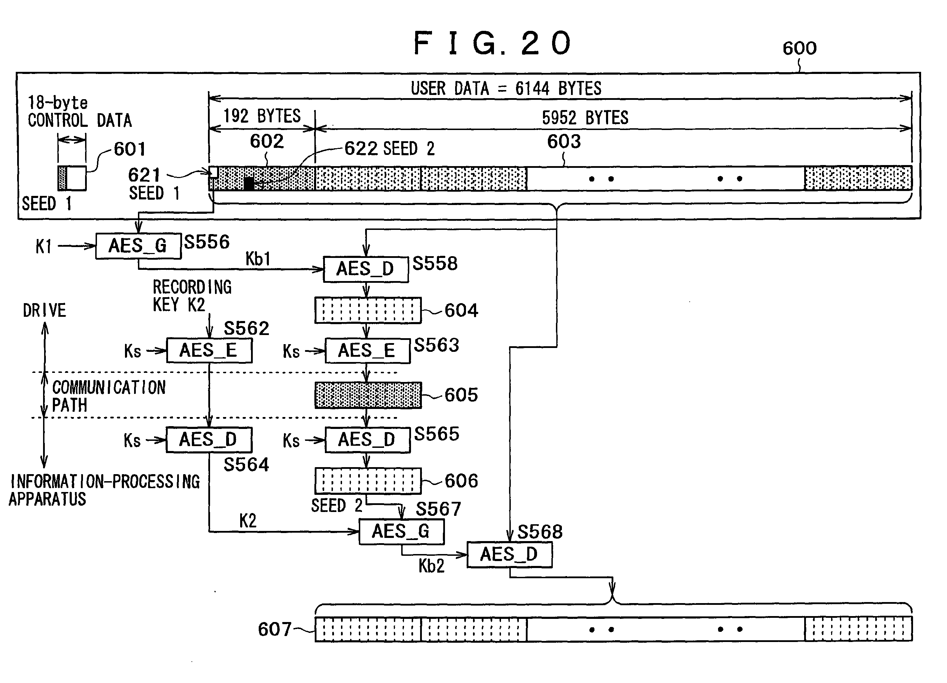

Fig. 20 is a diagram showing a typical configuration in which both the seed (seed 1) and the seed (seed 2) are stored in the first TS packet 602 of user data. In the typical configuration explained earlier by referring to Fig. 18, the seed (seed 1) 611 is stored in control data 601, and the seed (seed 2) 612 is stored in the first TS packet 602 of user data as encrypted information. In the typical configuration shown in Fig. 20, on the other hand, both the seed (seed 1) 621 and the seed (seed 2) 622 are stored in the first TS packet 602 of user data.

It is to be noted that, much like the typical configuration explained earlier by referring to Fig. 18, the seed (seed 2) 622 is stored in the first TS packet 602 of user data as information encrypted by using the block key Kb1, which is acquired by applying the seed (seed 1) 621.

In the typical configuration shown in Fig. 20, a decryption process is carried out in processing units 600. The processing unit 600 corresponds to the processing unit explained before by referring to Fig. 1(b). The processing unit explained before by referring to Fig. 1(b) is the AU (Aligned Unit). On the basis of a flag included in control data, the information-recording medium drive 510 reproducing encrypted data recorded on the information-recording medium 520 extracts an AU (Aligned Unit) used as the encryption processing unit.

Next, processing shown in Fig. 20 is explained. In Fig. 20, processing steps identical with their respective counterparts shown in Fig. 17 are denoted by the same reference numerals as the counterparts.

At the step S556 shown in Figs. 17 and 20, a seed (seed 1) 621 read out from the first TS packet of user data stored on the information-recording medium is supplied to an AES encryption processor, which carries out an AES encryption process applying a recording key K1 generated at the preceding step S554 shown in Fig. 17 on the seed 621 to generate a block key Kb1.

Then, at a step S557 shown in Fig. 17, only a data portion encrypted by using a block key Kb1 is extracted from user data including 32 TS packets. The encrypted data portion of the block key Kb1 is separated from an unencrypted data portion at the step S557, and only the encrypted data portion is subjected to a decryption process carried out at a step S558. The unencrypted data portion skips the step S558 and, at a step S559 (which is a selector step), the unencrypted data portion is again concatenated with a result of decrypting the encrypted data portion and is then encrypted by using a session key at a step S563.

At the step S558 shown in Figs. 17 and 20, an AES decryption process applying the block key Kb1 generated at the step S556 is carried out. Only a data portion obtained as a result of an encryption process applying the block key Kb1 is subjected to the decryption process carried out at the step S558. In this typical configuration, a data portion including at least the seed (seed 2) of the first TS packet 602 at the head of the user data is the data portion obtained as a result of an encryption process applying the block key Kb1. Thus, the data portion including at least the seed (seed 2) is subjected to the decryption process applying the block key Kb1.

The encrypted data portion of the first TS packet 602 includes the seed (seed 2) 622 required for computing a block key Kb2 to be applied to a process to decrypt user data portions other than the first TS packet 602. In this typical configuration, the other user data portions are the TS packet group 603 following the first TS packet 602 as a group having a length of 5952 bytes. That is to say, the seed (seed 2) 622 is recorded in the first TS packet 602 as encrypted data obtained as a result of an encryption process applying the block key Kb1.

As a result of the decryption process carried out at the step S556 by applying the block key Kb1, a decoded TS packet 604 is generated. A seed (seed 2) is included in the decoded TS packet 604.

At a selector step S559 shown in Fig. 17, the decoded TS packet 604 including the seed (seed 2) is concatenated with the other data to generate a concatenation result to be output to an encryption step S563. The decoded TS packet 604 including the seed (seed 2) is a result obtained from the decryption process applying the block key Kb1 as described above.

An encryption process carried out at the step S563 is an encryption process based on a common session key shared by the information-recording medium drive 510 and the information-processing apparatus 500. The session key is obtained as a result of a mutual authentication process carried out by the information-recording medium drive 510 and the information-processing apparatus 500. The mutual authentication process is carried out on the basis of authentication keys Km 530 and 540 shared by the information-recording medium drive 510 and the information-processing apparatus 500. The mutual authentication process and the process to share the session key have been explained by referring to Fig. 19.

As the session key Ks is shared by the information-processing apparatus 500 and the information-recording medium drive 510, the information-recording medium drive 510 carries out encryption processes of the steps S562 and S563 shown in Figs. 17 and 20. To be more specific, at the step S562, data is generated as a result of a process to encrypt the recording key K2 by using the session key Ks. At the step S563, secret information including seed (seed 2) is encrypted by using the session key Ks to generate an encrypted TS packet 605 shown in Fig. 20. These pieces of encrypted data are transferred from the information-recording medium drive 510 to the information-processing apparatus 500. That is to say, the pieces of data transmitted through a transmission line are each a result of encryption using the session key Ks.

At steps S564 and S565, the information-processing apparatus 500 decrypts these pieces of encrypted data received from the information-recording medium drive 510. To be more specific, at the step S564, the information-processing apparatus 500 decrypts the recording key eKs (K2), by applying the session key Ks, in order to acquire the recording key K2. At the step S565, on the other hand, the information-processing apparatus 500 decrypts encrypted secret information including the seed (seed 2) by applying the session key Ks in order to acquire decrypted information including the seed (seed 2). A TS packet 606 shown in Fig. 20 includes the decrypted seed (seed 2).

A step S566 is a selector step to split a result generated at the step S565 into the decrypted seed (seed 2), data to be decrypted by using the block key Kb2, and unencrypted data. At a step ZS567 shown in Figs. 17 and 20, an AES encryption process based on the seed (seed 2) and the recording key K2 is carried out to generate a block key Kb2. The seed (seed 2) is a result of the decryption process carried out at the step S565 by applying the session key Ks. On the other hand, the recording key K2 is the key generated at the step S564.

Then, at a step S568, an encrypted portion of the user data is decrypted by applying the block key Kb2 to generate a decoded TS packet group 607. The encrypted portion of the user data is a portion encrypted by using the block key Kb2.

At a selector step S569, the decoded TS packet group 607 is concatenated with the decoded TS packet 606, and the result of the concatenation is supplied to typically an MPEG-2 decoder, which then decodes the result of the concatenation to generate a final reproduced data.

As described above, in this typical configuration, a seed (seed 1) and a seed (seed 2) are both stored in the first TS packet of user data. The seed (seed 2) required for generating a block key Kb2 is stored as information encrypted by using a block key Kb1, which is generated by using the seed (seed 1) and a recording key K1.

Also in this typical configuration, it is thus impossible to read out the seed (seed 2) from the disc or a data transmission line without decryption. As a result, difficulties to analyze a key generated by using the seed and analyze an encryption algorithm are increased so that protection of contents at a high level of security can be implemented. These features can be further strengthened through enhancement of confidentiality by implementing methods including the method of acquiring a recording key K1 to the method of computing a block key Kb1, the method of generating a session key Ks, and the method of encrypting the session key Ks in the information-recording medium drive 500 as processing carried out in one LSI package.

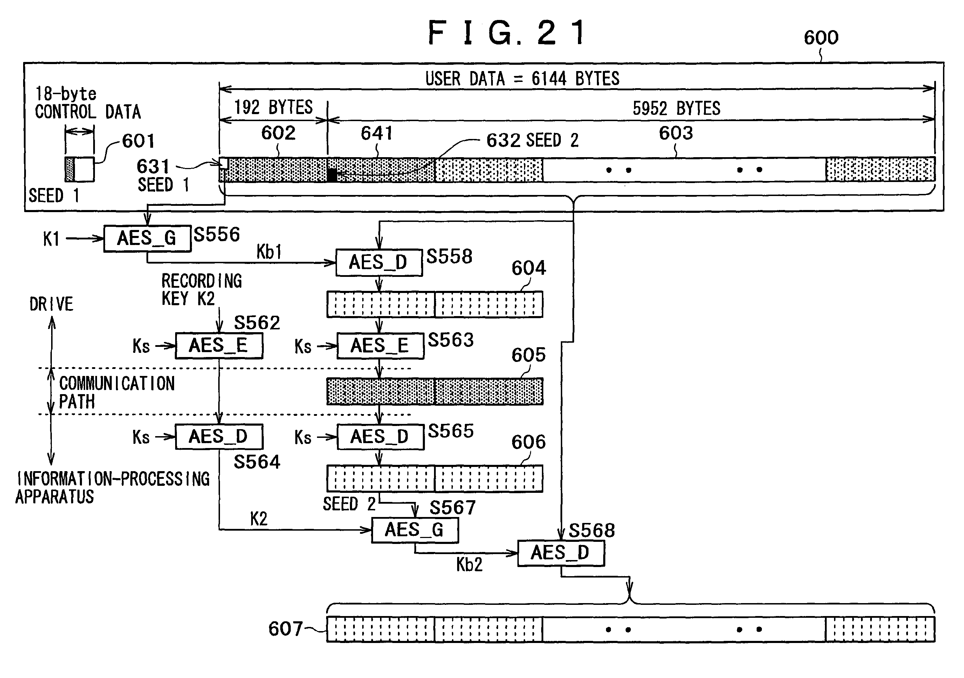

In a typical configuration shown in Fig. 21, the seed (seed 1) 631 is stored in the first TS packet 602 of user data, and the seed (seed 2) 632 is stored in a TS packet 641 immediately following the first TS packet 602.

It is to be noted that, as described earlier by referring to Figs. 18 and 20, the seed (seed 2) 632 is stored in the second TS packet 641 of user data as information encrypted by using a block key Kb1, which is generated by using the seed (seed 1) 631.

In the typical configuration shown in Fig. 21, a decryption process is carried out in processing units 600. The processing unit 600 corresponds to the processing unit explained before by referring to Fig. 1(b). The processing unit explained before by referring to Fig. 1(b) is the AU (Aligned Unit).

Next, processing shown in Fig. 21 is explained. In Fig. 21, processing steps identical with their respective counterparts shown in Fig. 17 are denoted by the same reference numerals as the counterparts.

At the step S556 shown in Figs. 17 and 21, a seed (seed 1) 631 read out from the first TS packet of user data stored on the information-recording medium is supplied to an AES encryption processor, which carries out an AES encryption process applying a recording key K1 generated at the preceding step S554 shown in Fig. 17 on the seed 631 in order to generate a block key Kb1.

Next, at a step S557 shown in Fig. 17, only a data portion encrypted by using a block key Kb1 is extracted from user data including 32 TS packets. The encrypted data portion of the block key Kb1 is separated from an unencrypted data portion at the step S557 and only the encrypted data portion encrypted is subjected to a decryption process carried out at a step S558. The unencrypted data portion skips the step S558 and, at a step S559 (which is a selector step), the unencrypted data portion is again concatenated with a result of decrypting the encrypted data portion and is then encrypted by using a session key at a step S563.

At the step S558 shown in Figs. 17 and 21, an AES decryption process applying the block key Kb1 generated at the step S556 is carried out. Only a data portion obtained as a result of an encryption process applying the block key Kb1 is subjected to this decryption process. In this typical configuration, an encrypted data portion of the data area excluding the seed (seed 1) 521 of the first TS packet of the user data and a data area including at least the other seed (seed 2) 632 of the second TS packet of the user data are subjected to the decryption process. As described earlier, there are some patterns with regard to determination of a data area as the data portion obtained as a result of an encryption process applying the block key Kb1.

In this typical configuration, the encrypted data portion of the second TS packet 641 includes the seed (seed 2) 632 required for computing a block key Kb2 to be applied to a process to decrypt user data portions other than the second TS packet 641. In this typical configuration, the other user data portions are the TS packet group 642 following the second TS packet 641. That is to say, the seed (seed 2) 632 is recorded in the second TS packet 641 as encrypted data obtained as a result of an encryption process applying the block key Kb1.

As a result of the decryption process carried out at the step S606 by applying the block key Kb1, a decoded TS packet 604 is generated. A seed (seed 2) is included in the decoded TS packet 604.

At a selector step S559 shown in Fig. 17, the decoded TS packet 604 including the seed (seed 2) is concatenated with the other data to generate a concatenation result to be output to an encryption step S563. The decoded TS packet 604 including the seed (seed 2) is a result obtained from the decryption process applying the block key Kb1 as described above.

An encryption process carried out at the step S563 is an encryption process based on a common session key shared by the information-recording medium drive 510 and the information-processing apparatus 500. The session key is obtained as a result of a mutual authentication process carried out by the information-recording medium drive 510 and the information-processing apparatus 500. The mutual authentication process is carried out on the basis of authentication keys Km 530 and 540 shared by the information-recording medium drive 510 and the information-processing apparatus 500. The mutual authentication process and the process to share the session key have been explained by referring to Fig. 19.

As the session key Ks is shared by the information-processing apparatus 500 and the information-recording medium drive 510, the information-recording medium drive 510 carries out encryption processes of the steps S562 and S563 shown in Figs. 17 and 21. To be more specific, at the step S562, data is generated as a result of a process to encrypt the recording key K2 by using the session key Ks. At the step S563, secret information including seed (seed 2) is encrypted by using the session key Ks to generate an encrypted TS packet 605 shown in Fig. 21. These pieces of encrypted data are transferred from the information-recording medium drive 510 to the information-processing apparatus 500. That is to say, the pieces of data transmitted through a transmission line are each a result of encryption using the session key Ks.

At steps S564 and S565, the information-processing apparatus 500 decrypts these pieces of encrypted data received from the information-recording medium drive 510. To be more specific, at the step S564, the information-processing apparatus 500 decrypts the recording key eKs (K2), by applying the session key Ks in order to acquire the recording key K2. At the step S565, on the other hand, the information-processing apparatus 500 decrypts encrypted secret information including the seed (seed 2) by applying the session key Ks in order to acquire decrypted information including the seed (seed 2). A TS packet 606 shown in Fig. 21 includes the decrypted seed (seed 2).

A step S566 is a selector step to split the output of the step S565 into the decrypted seed (seed 2), data to be decrypted by using the block key Kb2, and unencrypted data. At a step S567 shown in Figs. 17 and 21, an AES encryption process based on the seed (seed 2) and the recording key K2 is carried out to generate a block key Kb2. The seed (seed 2) is a result of the decryption process carried out at the step S565 by applying the session key Ks. On the other hand, the recording key K2 is the key generated at the step S564.

Then, at a step S568, an encrypted portion of the user data is decrypted by applying the block key Kb2 to generate a decoded TS packet group 607. The encrypted portion of the user data is a portion encrypted by using the block key Kb2.

At a selector step S569, the decoded TS packet group 607 is concatenated with the decoded TS packet 606, and the result of the concatenation is supplied to typically an MPEG-2 decoder, which then decodes the result of the concatenation to generate a final reproduced data.

As described above, this typical configuration stores in the first TS packet of user data of the seed (seed 1). The seed (seed 2) is stored in the second TS packet of the user data. The seed (seed 2) required for generating a block key Kb2 is stored as information encrypted by using a block key Kb1, which is generated by using the seed (seed 1) and a recording key K1.

Also in this typical configuration, it is thus impossible to read out the seed (seed 2) from the disc or a data transmission line without decryption. As a result, difficulties to analyze a key generated by using the seed and analyze an encryption algorithm are increased so that protection of contents at a high level of security can be implemented. These features can be further strengthened through enhancement of confidentiality by implementing methods including the method of acquiring a recording key K1 to the method of computing a block key Kb1, the method of generating a session key Ks, and the method of encrypting the session key Ks in the information-recording medium drive 500 as processing carried out in one LSI package.

### [Applications to Other Data Structures]

In the typical configurations described so far, data is stored on an information-recording medium as TS packets. However, the configuration of the present invention can be applied to a variety of data structures other than the TS packet. That is to say, in the typical configurations described so far, the second seed (seed 2) for encrypting data in block units to generate encrypted data is stored on an information-recording medium as information encrypted by using a block key Kb1 generated by applying another seed (seed 1) so that the leakage of the second seed (seed 2) can be avoided and protection of contents at a high level of security can be implemented. This scheme of the typical configurations described is effective for any other data structure other than the transport stream as long as an encryption process carried out in block units is applied, and a block key using a seed is generated.

In addition, in a particular one of the typical configurations described above where data is encrypted by using a session key before being transmitted through interfaces from one device to another, a typical process is carried out by using the session key to encrypt one of two seeds. A process carried out to transfer data after the data is encrypted is not limited to this particular configuration, but also generally effective for a configuration in which an encrypted content is stored on an information-recording medium.

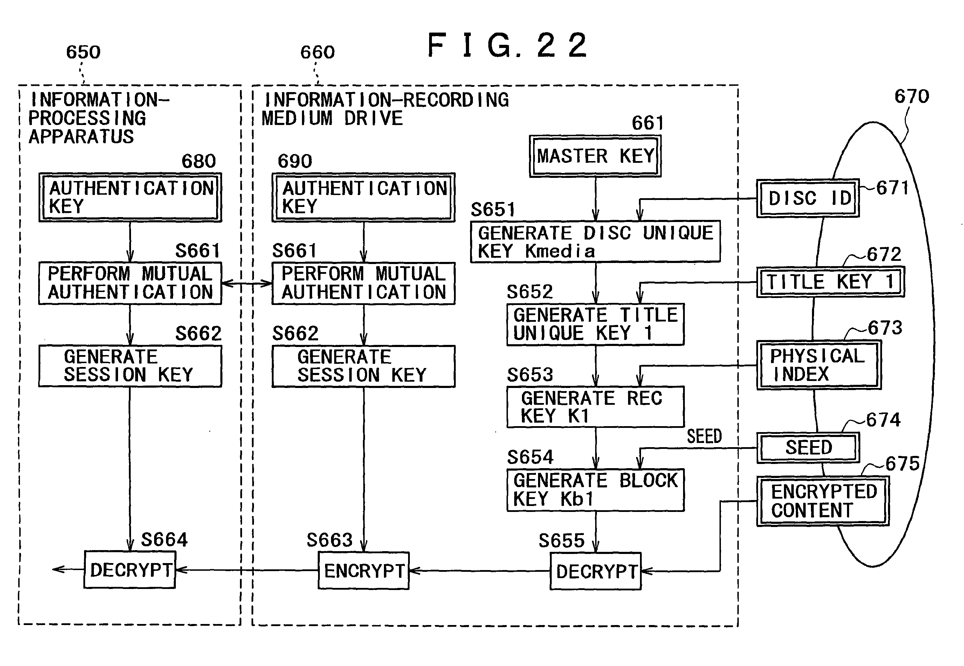

By referring to Fig. 22, the following description explains a typical process to transfer data between an information-processing apparatus and an information-recording medium drive in a configuration in which an encrypted content is stored on an information-recording medium.

In the typical process shown in Fig. 22, an encrypted content 675 recorded on a information-recording medium 670 is a content encrypted on the basis of a block key Kb1, which is generated by using a seed 674 set for each processing unit.

The following description explains a process carried out in an information-recording medium drive 660 to read out data from the information-recording medium 670 and a process carried out by an information-processing apparatus 650 such as a PC to reproduce a result from the data.

First of all, the information-recording medium drive 660 reads out a master key 661 stored in its own memory. It is to be noted that, if the master key 661 is stored in the information-processing apparatus 650, the information-recording medium drive 660 may receive the master key 661 from the information-processing apparatus 650. The master key 661 is a secret key generally stored in an information-processing apparatus granted a license. The information-processing apparatus granted a license may be an information-recording medium drive. The master key 661 is a common key stored in the memory 180 as a key common to a plurality of information-processing apparatus.

Subsequently, the information-recording medium drive 660 reads out a disc ID 671 from the information-recording medium 670. The disc ID 671 is information peculiar to the information-recording medium 670 and typically stored in a general-data storage area or a lead-in area on the information-recording medium 670.

Then, at a step S651, the information-recording medium drive 660 generates a disc unique key by using the master key 661 and the disc ID 671. Typical concrete methods each applicable to generation of a disc unique key have been explained before by referring to Figs. 4(a) and 4(b).

Then, title key 1 denoted by reference numeral 672 is read out from the information-recording medium 670. The title key 1 is an unique key for each recording content. The title key 672 is stored in a data management file existing on the information-recording medium 670 as a file for storing information indicating which title is assigned to which data.

Then, at a step 652, a title unique key 1 is generated from the disc unique key and title key 1 denoted by reference numeral 672.

Subsequently, at a step S653, the information-recording medium drive 660 generates a recording key (a REC key) K1 on the basis of the title unique key 1 generated at the step S652 and a physical index 673 read out from the information-recording medium 670.

Typical processing carried out at the step S653 to generate the recording key (REC key) K1 has been explained earlier by referring to Figs. 5(a) and 5(b). As shown in the figure, the recording key (a REC key) K1 is generated by carrying out an AES (Advanced Encryption Standard) encryption process on the basis of the title unique key 1 and a physical index 673 read out from the information-recording medium 670.

In the process carried out at the step S654 to generate a block key Kb1, a seed 674 is read out from the information-recording medium 670 as information required for generation of the block key Kb1. Then, an encryption process based on the seed 674 and the recording key K1 generated at the step S653 is carried out to generate the block key Kb1.

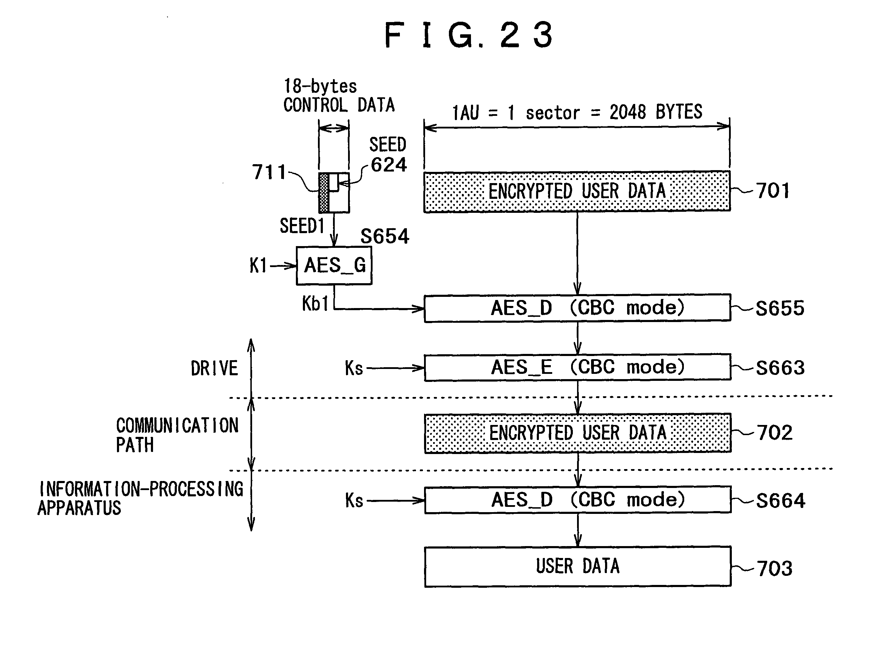

By referring to Fig. 23, the following description explains processes carried out after the process performed at the step S654 to generate the block key Kb1.

In the typical configuration shown in Fig. 23, a decryption process is carried out in processing units, which are each user data 701 of a processing unit having a typical size of 2048 bytes. Control data 711 is set for each processing unit. On the basis of a flag included in control data, the information-recording medium drive 660 extracts an AU (Aligned Unit) used as the encryption processing unit.

A processing unit includes the control data 711 having a length of 18 bytes and encrypted user data 701 having a size of 2048 bytes. A seed 674 is included in the control data 711. The encrypted data 701 is data encrypted by using a block key Kb1 generated on the basis of the seed 721.

In Fig. 23, processing steps identical with their respective counterparts shown in Fig. 22 are denoted by the same reference numerals as the counterparts.

At the step S654 shown in Figs. 22 and 23, a seed 674 read out from control data stored on the information-recording medium is supplied to an AES encryption processor, which carries out an AES encryption process applying a recording key K1 generated at the preceding step S653 on the seed 674 to generate a block key Kb1.

At the step S655 shown in Figs. 22 and 23, an AES decryption process applying the block key Kb1 generated at the step S554 is carried out. User data 701 obtained as a result of an encryption process applying the block key Kb1 is subjected to the decryption process carried out at the step S655. Typically, the process is carried out by applying an AES CBC (Cipher Block Chaining) method.

An encryption process carried out at the next step S663 is an encryption process based on a common session key shared by the information-recording medium drive 660 and the information-processing apparatus 650. The session key is obtained as a result of a mutual authentication process carried out by the information-recording medium drive 660 and the information-processing apparatus 650. The mutual authentication process is carried out on the basis of authentication keys Km 680 and 690 shared by the information-recording medium drive 660 and the information-processing apparatus 650. A typical sequence of mutual authentication operations is shown in Fig. 19 as described before.

At steps S661 and S662 shown in Fig. 22, respectively, a mutual authentication process and a process to generate a session key Ks to be shared by the information-processing apparatus 650 and the information-recording medium drive 660 are carried out.

Then, at a step S663 shown in Figs. 22 and 23, the information-recording medium drive 660 carries out an encryption process.

The encryption process carried out at the step S663 is a process to encrypt decrypted user data by using the session key Ks. The decrypted user data is a result of the decryption process carried out at the step S655. The encryption process is a process applying typically the AES CBC (Cipher Block Chaining) method to generate encrypted user data 702.

The encrypted data, that is, the user data 702 shown in Fig. 23, is transferred from the information-recording medium drive 660 to the information-processing apparatus 650. That is to say, what is transferred through a data communication line is data encrypted by using the session key Ks.

At a step S664, the information-processing apparatus 650 decrypts the encrypted data received from the information-recording medium drive 660 to produce user data 703. The decryption process carried out at this step is a process applying the session key Ks and, typically, the AES CBC (Cipher Block Chaining) method.

Also in processing carried out in this typical configuration to reproduce data stored on an information-recording medium, data to be transferred from one device to another is encrypted by using a session key in advance. It is thus possible to prevent a content from leaking even if the encrypted data is tapped from a transmission line. As a result, protection of contents at a high level of security can be implemented. These features can be further strengthened through enhancement of confidentiality by implementing methods including the method of acquiring a recording key K1 to the method of computing a block key Kb1, the method of generating a session key Ks, and the method of encrypting the session key Ks in the information-processing apparatus 500 as processing carried out in one LSI package.

So far, the present invention has been explained in detail by referring to specific embodiments. However, it will be obvious that a person skilled in the art is capable of modifying the embodiments and creating substitutes for the embodiments in a range not deviating from essentials of the present invention. That is to say, the embodiments are used for exemplifying the present invention and not to be interpreted as limitations to the present invention. In order to determine the essentials of the present invention, only what is described in claims should be referred to.

The series of processes described above can be carried out by using hardware, software, or a combination of both hardware and software. If the processes are carried out by using software, programs each prescribing a processing sequence are installed into a memory employed in a computer embedded in a special-purpose hardware or installed into a memory of a general-purpose computer. A general-purpose computer is a computer capable of carrying out a variety of functions by executing a variety of programs installed in the computer.

Instead of installing the programs into a memory, the programs can also be recorded in advance in a recording medium such as a hard disc or a ROM (Read Only Memory).

Alternatively, the programs to be installed in the memory can be stored temporarily or permanently (recorded) in a removable recording medium such as a flexible disc, a CD-ROM (Compact Disc-Read Only Memory), an MO (magneto-optical) disc, a DVD (Digital Versatile Disc), a magnetic disc, or a semiconductor memory. The program stored in such a removable recording medium is presented to the user as the so-called package software.

It is to be noted that, instead of installing the programs into a memory from the removable recording medium, the programs can also be transmitted from a download site to the computer by radio transmission or by wired transmission through a network such as a LAN (Local Area Network) or the Internet. The computer is then capable of installing the programs received from the download site into an embedded recording medium such as the hard disc cited above.

It is to be noted that, the various steps described in this specification can of course be executed sequentially along the time axis in an order of the description. However, the steps can also be executed as processes carried out concurrently or individually in accordance with the processing capacity or necessity of the apparatus to execute the steps. In addition, the technical term 'system' used in this specification means a logically set configuration including a plurality of apparatus even though the apparatus do not have to be enclosed in one cabinet.

### Industrial Applicability

As described above, in accordance with the configuration of the present invention, a seed (seed 2) required for generating a key (a block key Kb2) to be applied to a process to decrypt an encrypted content is stored on a disc as information encrypted by another key (block key Kb1). It is thus impossible to read out the seed (seed 2) from the disc without decryption. As a result, difficulties to analyze a key generated by using the seed and analyze an encryption algorithm are increased so that protection of contents at a high level of security can be implemented.

In addition, in accordance with an implementation of the present invention, in a configuration wherein a seed (seed 2) required for generating a key (a block key Kb2) to be applied to a process to decrypt an encrypted content is transferred from a device to another, pieces of block-key generation information or, concretely speaking, the seed (seed 2) and a recording key K2, are both transferred after being encrypted by using a session key. Thus, even if data leaks from a transmission line between the devices, it will be difficult to acquire the seed (seed 2) and the recording key K2. As a result, difficulties to analyze a key generated by using the seed and analyze an encryption algorithm are increased so that protection of contents at a high level of security can be implemented.

## Claims

1. An information-processing apparatus used for carrying out a process to decrypt encrypted data stored on an information-recording medium, said information-processing apparatus having encryption-processing means for:
generating a first block key Kb1 on the basis of a first seed serving as key generation information set for each of encryption-processing units composing said encrypted data stored on said information-recording medium;
acquiring a second seed by carrying out a process to decrypt an encrypted second seed stored on said information-recording medium on the basis of said generated first block key Kb1;
generating a second block key Kb2 by carrying out an encryption process based on said acquired second seed; and
decrypting said encrypted data stored on said information-recording medium based on said generated second block key Kb2.

2. The information-processing apparatus according to claim 1, said information-processing apparatus having storage means for storing master-key generation information, wherein said encryption-processing means:
generates a master key on the basis of said master-key generation information;
generates two recording keys K1 and K2 on the basis of said generated master key and information read out from said information-recording medium;
generates a first block key Kb1 by carrying out an encryption process based on said generated first recording key K1 and said first seed;
acquires a second seed by carrying out a process to decrypt an encrypted second seed stored on said information-recording medium on the basis of said generated first block key Kb1;
generates a second block key Kb2 by carrying out an encryption process based on said acquired second seed and said generated second recording key K2; and
decodes encrypted data stored on said information-recording medium by carrying out a decryption process based on said generated second block key Kb2.

3. The information-processing apparatus according to claim 2 wherein said encryption-processing means also:
generates a first title unique key and a second title unique key on the basis of said master key, a disc ID, which is information read out from said information-recording medium, and two title keys recorded on said information-recording medium;
generates a first recording key K1 by carrying out an encryption process based on said first title unique key and first information read out from said information-recording medium; and
generates a second recording key K2 by carrying out an encryption process based on said second title unique key and second information read out from said information-recording medium.

4. The information-processing apparatus according to claim 2 wherein said encryption-processing means also:
generates a first title unique key and a second title unique key on the basis of said master key, a disc ID, which is information read out from said information-recording medium, and one key seed recorded on said information-recording medium;
generates a first recording key K1 by carrying out an encryption process based on said first title unique key and first information read out from said information-recording medium; and
generates a second recording key K2 by carrying out an encryption process based on said second title unique key and second information read out from said information-recording medium.

5. An information-recording medium drive used for reading out encrypted data from an information-recording medium and outputting said encrypted data to an external apparatus, said information-recording medium drive comprising:
an authentication-processing unit for carrying out an authentication process with said external apparatus to receive said encrypted data read out from said information-recording medium in order to generate a session key Ks; and
encryption-processing means for:
generating a first block key Kb1 on the basis of a first seed serving as key generation information set for each of encryption-processing units composing said encrypted data stored on said information-recording medium;
acquiring a second seed by carrying out a process to decrypt an encrypted second seed stored on said information-recording medium on the basis of said generated first block key Kb1; and
generating output-use encrypted information by carrying out a process to encrypt data including said second seed on the basis of said session key Ks,
wherein said output-use encrypted information obtained as a result of said process to encrypt data including said second seed on the basis of said session key Ks is output through an interface.

6. The information-recording medium drive according to claim 5 wherein said encryption-processing means also:
generates a master key on the basis of master-key generation information held by said information-recording medium drive;
generates two recording keys K1 and K2 on the basis of said master key and information read out from said information-recording medium;
generates a first block key Kb1 by carrying out an encryption process based on said generated first recording key K1 and said first seed;
acquires a second seed by carrying out a process to decrypt an encrypted second seed stored on said information-recording medium on the basis of said generated first block key Kb1;
generates output-use encrypted information by encrypting data including said second seed and said second recording key K2 on the basis of said session key Ks; and
outputs said output-use encrypted information including said second seed and said second recording key K2 through an interface.

7. An information-processing apparatus used for carrying out a process to decrypt encrypted data received from an external apparatus through a data input interface, said information-processing apparatus comprising:
an authentication-processing unit for carrying out an authentication process with said external apparatus outputting said encrypted data in order to generate a session key Ks; and
an encryption-processing unit for:
acquiring a seed used as key generation information and a recording key by carrying out a process based on said session key to decrypt encrypted information received through said data input interface;
generating a block key to be used as a decryption key for decryption of encrypted data by carrying out an encryption process based on said seed and said recording key; and
carrying out a process based on said block key to decrypt encrypted data.

8. An information-recording medium drive used for reading out encrypted data from an information-recording medium and outputting said encrypted data to an external apparatus, said information-recording medium drive having a configuration comprising:
an authentication-processing unit for carrying out an authentication process with said external apparatus to receive said encrypted data read out from said information-recording medium in order to generate a session key Ks; and
encryption-processing means for:
generating a block key on the basis of a seed serving as key generation information set for each of encryption-processing units composing said encrypted data stored on said information-recording medium;
acquiring decrypted data by carrying out a process to decrypt said encrypted data stored on said information-recording medium on the basis of said generated block key; and
generating output-use encrypted information by carrying out a process to encrypt said decrypted data on the basis of said generated session key Ks,
wherein said output-use encrypted information obtained as a result of said process to encrypt said decrypted data on the basis of said session key Ks is output through an interface.

9. An information-recording medium used for storing encrypted data, said information-recording medium comprising a configuration for storing:
a first seed serving as key generation information set for each of encryption-processing units composing said encrypted data;
a second seed serving as key generation information encrypted on the basis of a first block key Kb1 generated on the basis of said first seed; and
an encrypted content encrypted on the basis of a second block key Kb1 generated on the basis of said second seed.

10. The information-recording medium according to claim 9 wherein said first seed is stored inside control information set for each of encryption-processing units whereas said second seed is stored as encrypted information in a user-data area outside said control information.

11. The information-recording medium according to claim 9 wherein said first seed is stored in a user-data area as unencrypted data whereas said second seed is stored in said user-data area as encrypted data.

12. The information-recording medium according to claim 9 wherein said encrypted data is a transport stream packet, said first seed is stored inside control information for a plurality of transport stream packets, and said second seed is stored as encrypted information inside one of said transport stream packets in a user-data area outside said control information.

13. The information-recording medium according to claim 9 wherein said first seed is stored inside a transport stream packet in a user-data area as unencrypted data whereas said second seed is stored as encrypted information inside said transport stream packet in said user-data area.

14. An information-processing method used for carrying out a process to decrypt encrypted data stored on an information-recording medium, said information-processing method comprising the steps of:
generating a first block key Kb1 on the basis of a first seed serving as key generation information set for each of encryption-processing units composing said encrypted data stored on said information-recording medium;
acquiring a second seed by carrying out a process to decrypt an encrypted second seed stored on said information-recording medium on the basis of said generated first block key Kb1;
generating a second block key Kb2 based on said acquired second seed; and
decrypting said encrypted data stored on said information-recording medium by carrying out a decryption process based on said generated second block key Kb2.

15. The information-processing method according to claim 14, said information-processing method further having the steps of:
generating a master key on the basis of master-key generation information read out from storage means;
generating two recording keys K1 and K2 on the basis of said generated master key and information read out from said information-recording medium;
generating a first block key Kb1 by carrying out an encryption process based on said generated first recording key K1 and said first seed;
acquiring a second seed by carrying out a process to decrypt an encrypted second seed stored on said information-recording medium on the basis of said generated first block key Kb1;
generating a second block key Kb2 by carrying out an encryption process based on said acquired second seed and said generated second recording key K2; and
decrypting said encrypted data stored on said information-recording medium by carrying out a decryption process based on said generated second block key Kb2.

16. The information-processing method according to claim 15, said information-processing method further having the steps of:
generating a first title unique key and a second title unique key on the basis of said master key, a disc ID, which is information read out from said information-recording medium, and two title keys recorded on said information-recording medium;
generating a first recording key K1 by carrying out an encryption process based on said first title unique key and first information read out from said information-recording medium; and
generating a second recording key K2 by carrying out an encryption process based on said second title unique key and second information read out from said information-recording medium.

17. The information-processing method according to claim 15, said information-processing method further having the steps of:
generating a first title unique key and a second title unique key on the basis of said master key, a disc ID, which is information read out from said information-recording medium, and one key seed recorded on said information-recording medium;
generating a first recording key K1 by carrying out an encryption process based on said first title unique key and first information read out from said information-recording medium; and
generating a second recording key K2 by carrying out an encryption process based on said second title unique key and second information read out from said information-recording medium.

18. An information-processing method used for reading out encrypted data from an information-recording medium and outputting said encrypted data to an external apparatus, said information-processing method comprising the steps of:
carrying out an authentication process with said external apparatus to receive said encrypted data read out from said information-recording medium in order to generate a session key Ks; and
generating a first block key Kb1 on the basis of a first seed serving as key generation information set for each of encryption-processing units composing said encrypted data stored on said information-recording medium;
acquiring a second seed by carrying out a process to decrypt an encrypted second seed stored on said information-recording medium on the basis of said generated first block key Kb1;
generating output-use encrypted information by carrying out a process to encrypt data including said second seed on the basis of said session key Ks; and
outputting said output-use encrypted information obtained as a result of said process to encrypt data including said second seed on the basis of said session key Ks through an interface.

19. The information-processing method according to claim 18, said information-processing method further having the steps of:
generating a master key on the basis of master-key generation information held by an information-recording medium drive;
generating two recording keys K1 and K2 on the basis of said master key and information read out from said information-recording medium;
generating a first block key Kb1 by carrying out an encryption process based on said generated first recording key K1 and said first seed;
acquiring a second seed by carrying out a process to decrypt an encrypted second seed stored on said information-recording medium on the basis of said generated first block key Kb1;
generating output-use encrypted information by encrypting data including said second seed and said second recording key K2 on the basis of said session key Ks; and
outputting said output-use encrypted information including said second seed and said second recording key K2 through an interface.

20. An information-processing method used for carrying out a process to decrypt encrypted data received from an external apparatus through a data input interface, said information-processing method comprising the steps of:
carrying out an authentication process with said external method outputting said encrypted data in order to generate a session key Ks;
acquiring a seed used as key generation information and a recording key by carrying out a process based on said session key to decrypt encrypted information received through said data input interface;
generating a block key to be used as a decryption key for decryption of encrypted data by carrying out an encryption process based on said seed and said recording key; and
carrying out a process based on said block key to decrypt encrypted data.

21. An information-processing method used for reading out encrypted data from an information-recording medium and outputting said encrypted data to an external apparatus, said information-processing method comprising the steps of:
carrying out an authentication process with said external method to receive said encrypted data read out from said information-recording medium in order to generate a session key Ks;
generating a block key on the basis of a seed serving as key generation information set for each of encryption-processing units composing said encrypted data stored on said information-recording medium;
acquiring decrypted data by carrying out a process to decrypt encrypted data stored on said information-recording medium on the basis of said generated block key;
generating output-use encrypted information by carrying out a process to encrypt said decrypted data on the basis of said generated session key Ks; and
outputting said output-use encrypted information obtained as a result of said process to encrypt said decrypted data on the basis of said session key Ks through an interface.

22. A computer program to be executed for carrying out a process to decrypt encrypted data stored on an information-recording medium, said computer program comprising the steps of:
generating a first block key Kb1 on the basis of a first seed serving as key generation information set for each of encryption-processing units composing said encrypted data stored on said information-recording medium;
acquiring a second seed by carrying out a process to decrypt an encrypted second seed stored on said information-recording medium on the basis of said generated first block key Kb1;
generating a second block key Kb2 based on said acquired second seed; and
decrypting said encrypted data stored on said information-recording medium by carrying out a decryption process based on said generated second block key Kb2.
